# EUROPEAN PATENT APPLICATION

(11) **EP 4 679 783 A1**
(43) Date of publication of application: **14.01.2026**
(21) Application number: 24792961.5
(22) Date of filing: 15.04.2024
(51) Int. Cl.: H04L 25/02, H04W 88/04, H04L 1/00, H04W 84/12, H04W 24/08, H04W 24/10, H04L 27/26, H04B 7/0417

(54) **METHOD AND APPARATUS FOR RELAY CHANNEL ESTIMATION IN WIRELESS LAN SYSTEM**

(30) Priority: 17.04.2023 KR 20230050326; 06.07.2023 KR 20230087939; 30.10.2023 KR 20230147083
(71) Applicant: LG ELECTRONICS, INC., Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR)
(74) Representative: Plasseraud IP
(86) International application number: PCT/KR2024/005034
(87) International publication number: WO 2024/219775

(57) **Abstract**

The present disclosure relates to relay channel estimation in a wireless LAN system. According to an embodiment of the present disclosure, a method performed b y a station (STA) in a wireless local area network (LAN) system comprises the steps of: receiving, from an access point (AP), a relay trigger frame for a relay operation through a relay STA between the AP and the STA; on the basis of the reception of the relay trigger frame, monitoring for a signal for measuring, from the relay STA, a relay channel between the relay STA and the STA; on the basis of the signal for the measurement of the relay channel, acquiring relay channel information regarding the relay channel; and transmitting the relay channel information.

## Description

### Technical field

The present disclosure is related to relay channel estimation in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, to extend reliable transmission and/or coverage/communication range for various STAs (e.g., IoT devices), a relay operation may be considered, in which an AP transmits a signal to one or more non-AP STAs or receives a signal from one or more non-AP STAs via an intermediate relay device. A technology for efficiently performing such relay operation is required.

### Disclosure of Invention

### Technical Problem

An aspect of the present disclosure is to provide method and apparatus for relay channel estimation in a WLAN system.

### Solution to Problem

According to an embodiment of the present disclosure, a method performed by a station (STA) in a wireless local area network (LAN) system comprises: receiving, from an access point (AP), a relay trigger frame for relay operation via a relay STA between the AP and the STA; monitoring a signal for measuring a relay channel between the relay STA and the STA from the relay STA based on the reception of the relay trigger frame; obtaining relay channel information for the relay channel based on the signal for measuring the relay channel; and transmitting the relay channel information.

According to an embodiment of the present disclosure, a method performed by a relay station (STA) in a wireless local area network (LAN) system comprises: receiving, from an access point (AP), a relay trigger frame for relay operation via the relay STA between the AP and one or more STAs; based on reception of the relay trigger frame, transmitting, to the one or more STAs, a signal for measuring a relay channel between the relay STA and the one or more STAs; and based on at least one parameter related to a measurement result for the relay channel, relaying a signal for relay operation between the AP and the one or more STAs on the relay channel.

In various embodiments, apparatuses implementing the above methods are provided.

### Advantageous Effect

The present disclosure may have various advantageous effects.

For example, by using channel information between a relay STA and a non-AP STA, transmission parameters appropriate to the channel conditions can be applied when transmitting and receiving signals between the relay STA and the non-AP STA, and thus, a reduction in delay and an improvement in throughput of relay transmission can be expected.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows a modified example of a transmitting device and/or a receiving device of the present disclosure.
FIG. 6 shows an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 shows an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 shows a trigger frame format.
FIGs. 15a and 15b show Common Info field format.
FIGs. 16a and 16b show User Info field format.
FIG. 17 shows an example of a channel sounding procedure.
FIG. 18 shows an example of relay transmission/operation.
FIG. 19 shows an example of a method performed by a non-AP STA for relay channel estimation according to an embodiment of the present disclosure.
FIG. 20 shows an example of a method performed by a relay STA for relay channel estimation according to an embodiment of the present disclosure.
FIG. 21 shows a first example of a procedure for reporting DL channel information according to an embodiment of the present disclosure.
FIG. 22 shows the structure of a feedback request frame according to an embodiment of the present disclosure.
FIG. 23 shows a second example of a procedure for reporting DL channel information according to an embodiment of the present disclosure.
FIG. 24 shows a third example of a procedure for reporting DL channel information according to an embodiment of the present disclosure.
FIG. 25 shows a fourth example of a procedure for reporting DL channel information according to an embodiment of the present disclosure.
FIG. 26 shows a first example of a procedure for reporting UL channel information according to an embodiment of the present disclosure.
FIG. 27 shows a second example of a procedure for reporting UL channel information according to an embodiment of the present disclosure.
FIG. 28 shows a first example of a procedure for performing DL channel estimation for the AP link and DL channel estimation for the relay link together, according to an embodiment of the present disclosure.
FIG. 29 shows a second example of a procedure for simultaneously performing DL channel estimation for an AP link and DL channel estimation for a relay link, according to an embodiment of the present disclosure.
FIG. 30 shows a third example of a procedure for simultaneously performing DL channel estimation for an AP link and DL channel estimation for a relay link, according to an embodiment of the present disclosure.
FIG. 31 shows a fourth example of a procedure for simultaneously performing DL channel estimation for an AP link and DL channel estimation for a relay link, according to an embodiment of the present disclosure.
FIG. 32 shows a first example of a procedure for simultaneously performing UL channel estimation for the AP link and UL channel estimation for the relay link, according to an embodiment of the present disclosure.
FIG. 33 shows a second example of a procedure for simultaneously performing UL channel estimation for an AP link and UL channel estimation for a relay link, according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

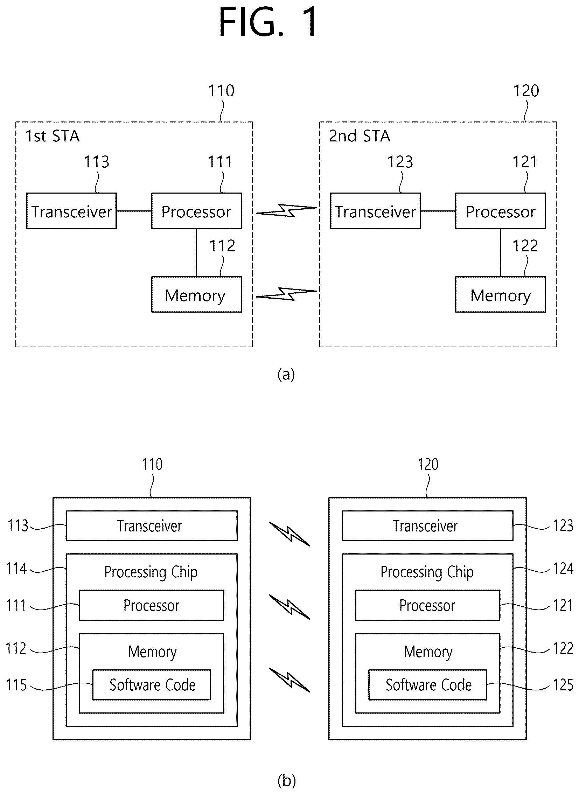

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

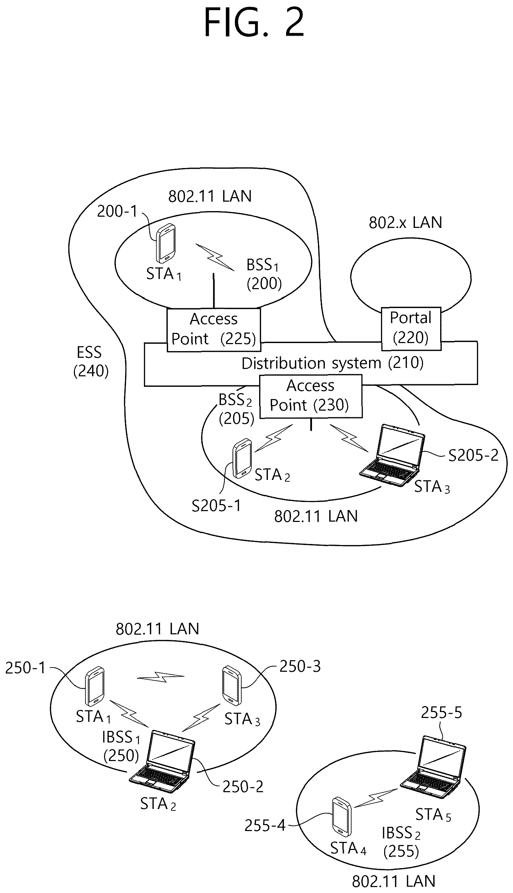

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

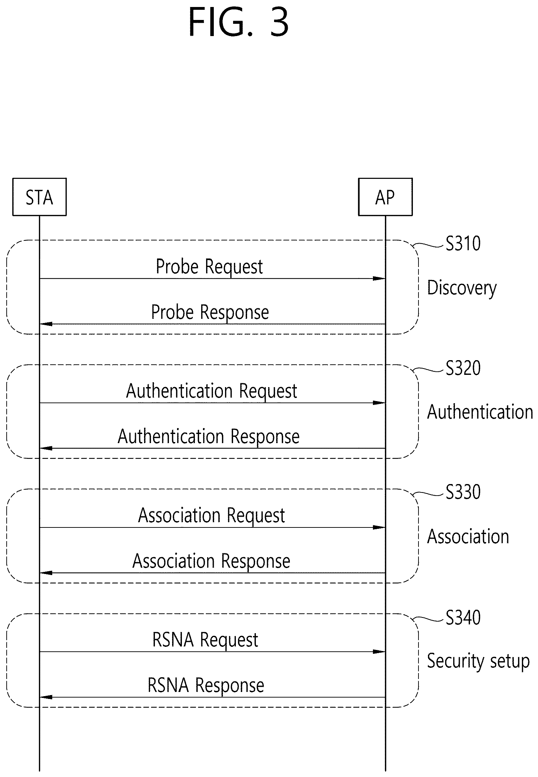

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

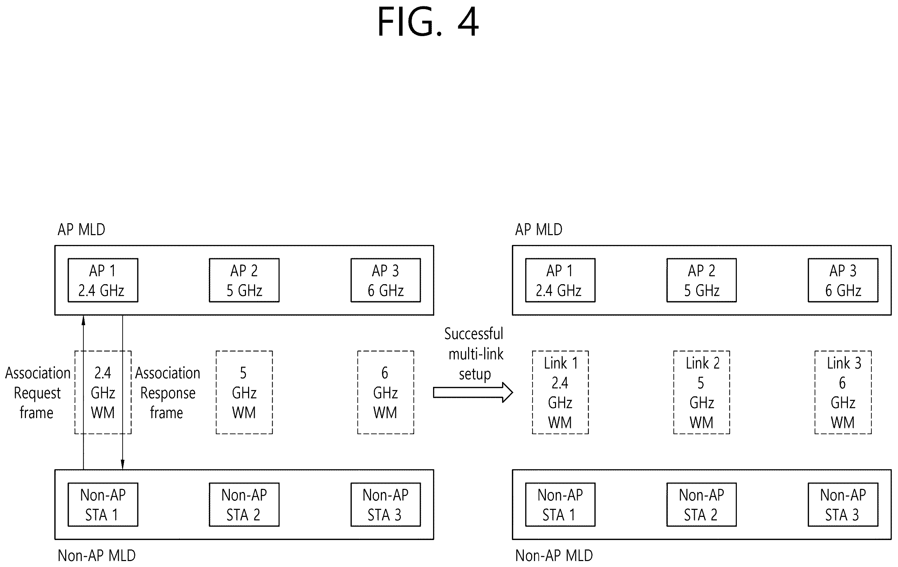

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

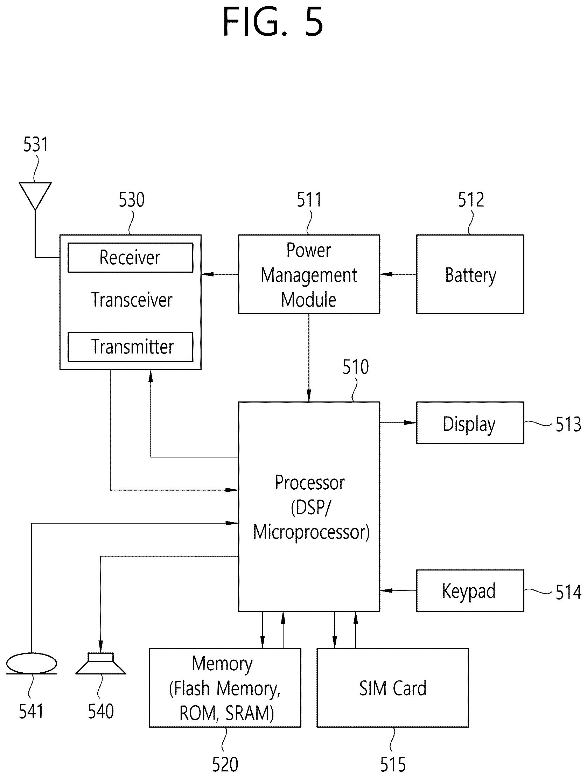

FIG. 5 shows a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

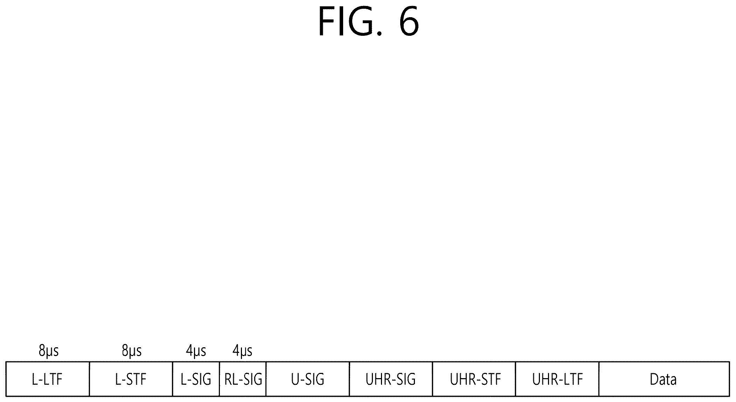

FIG. 6 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an MCS applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

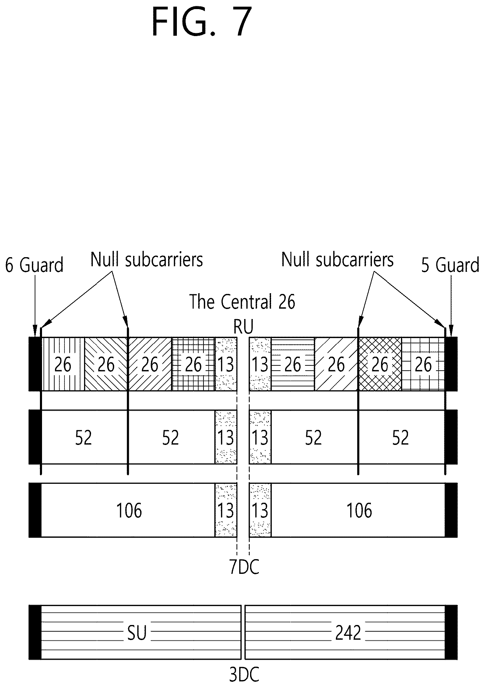

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

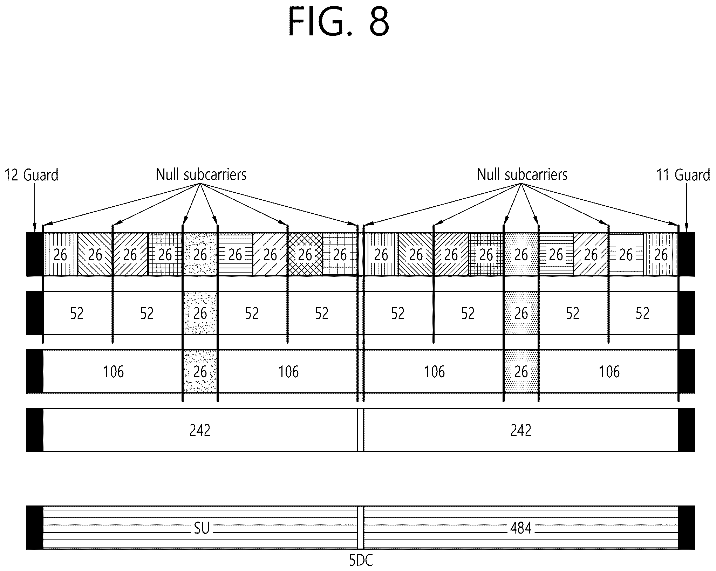

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

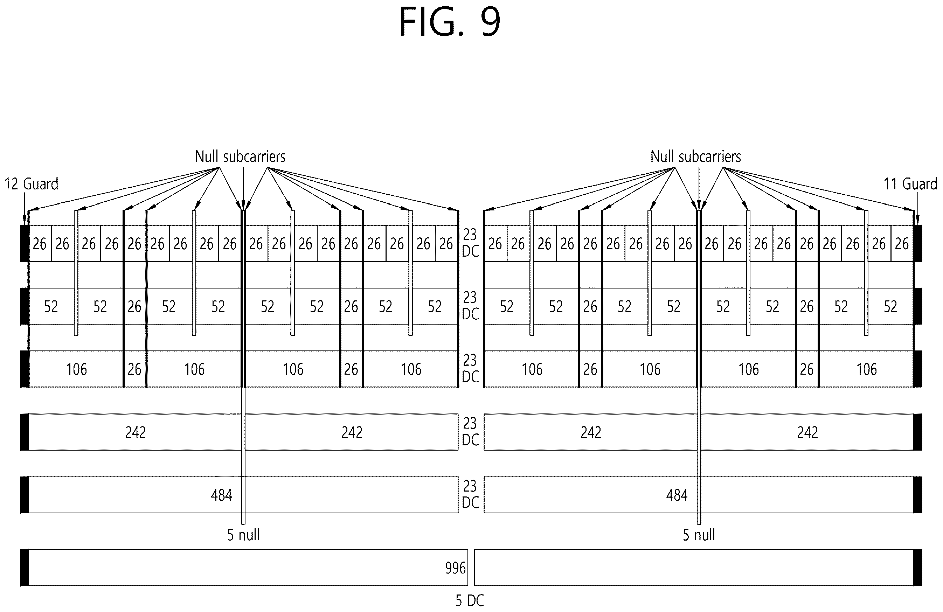

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

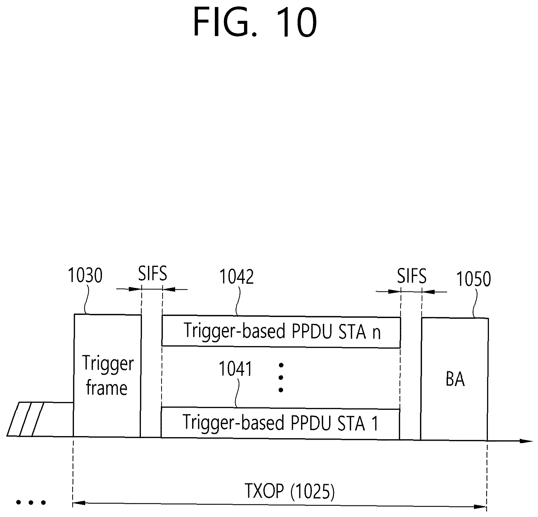

FIG. 10 shows an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

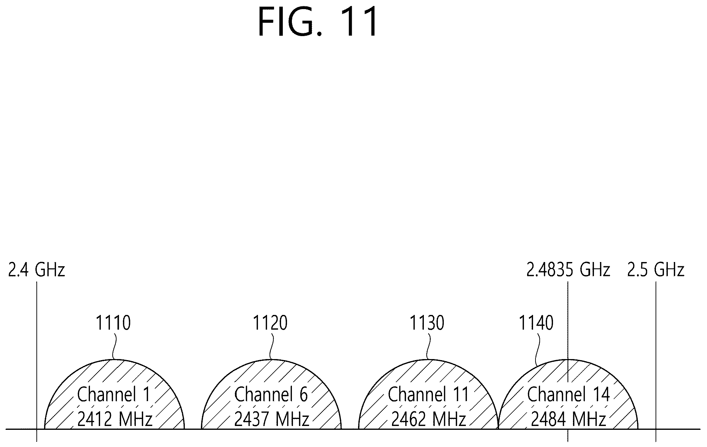

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

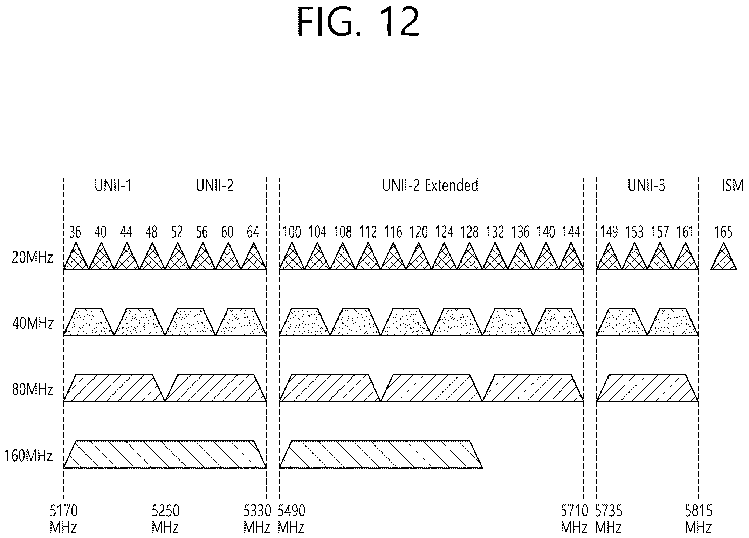

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

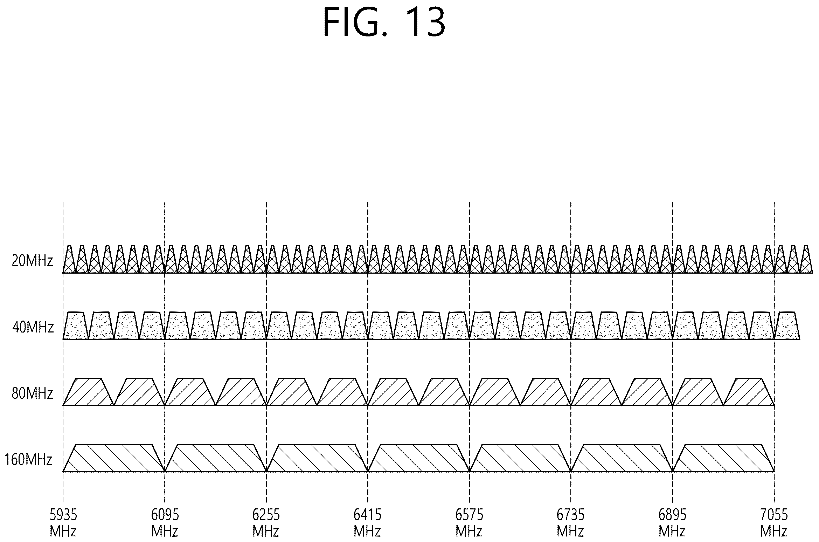

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

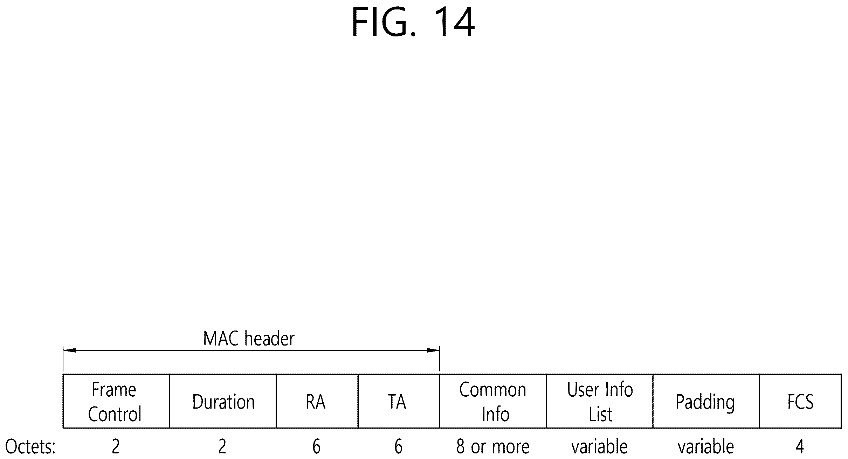

FIG. 14 shows a trigger frame format. The trigger frame format may also be referred to as the structure of a trigger frame.

Referring to FIG. 14, a trigger frame may include a frame control field, a duration field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration field, RA field, and TA field may constitute a MAC header.

The Common Info field may include a HE variant Common Info field and/or an EHT variant Common Info field. The User Info field may also include a HE variant User Info field and/or an EHT variant User Info field.

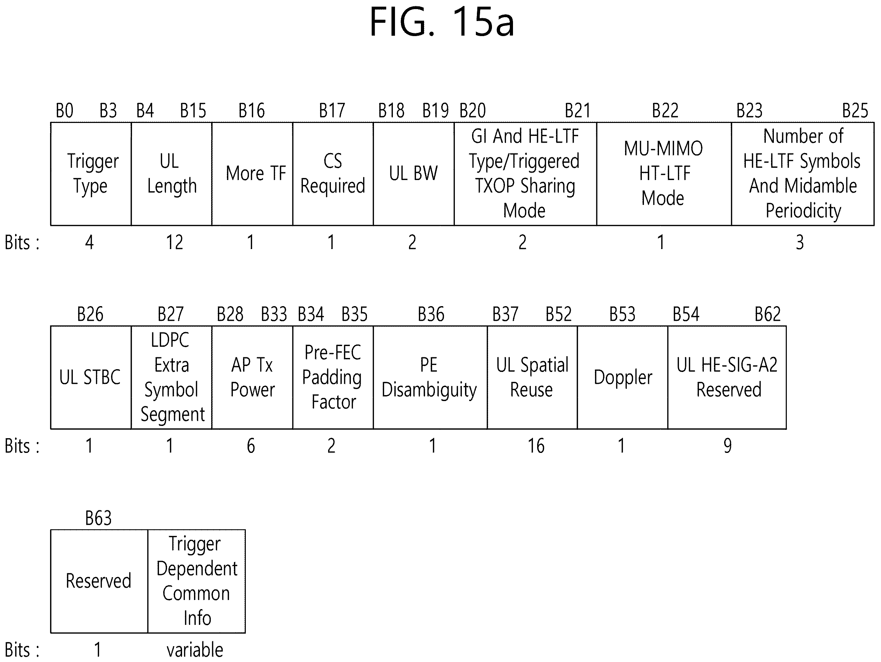

FIG. 15a shows HE variant Common Info field format. The HE variant Common Info field format may also be referred to as the structure of the HE variant Common Info field.

Referring to FIG. 15a, the HE variant Common Info field may include various subfields. For example, the HE variant Common Info field may include a trigger type subfield (B0-B3, 4 bits), a reserved subfield (B63, 1 bit), and/or a trigger dependent Common Info subfield (variable bit size).

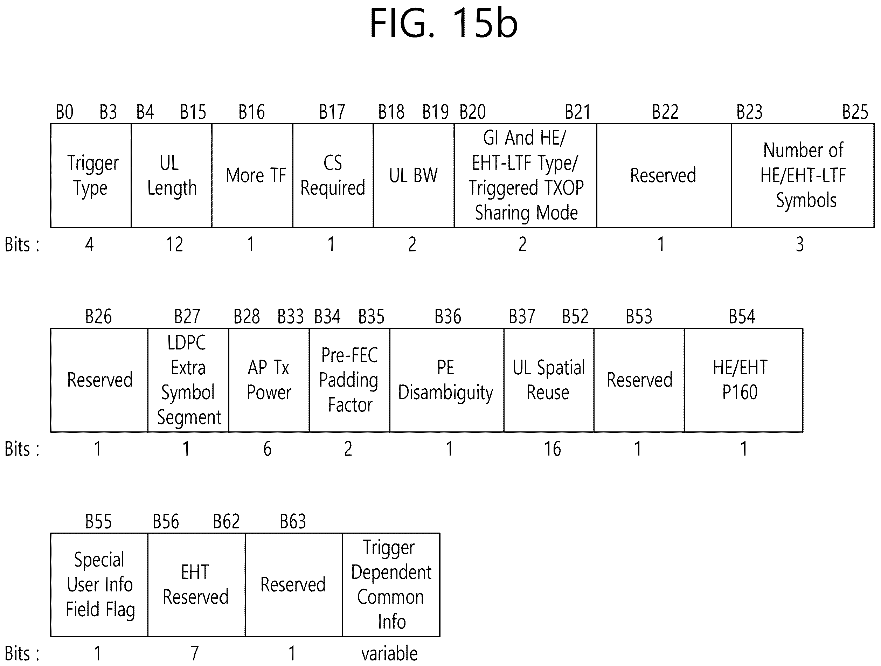

FIG. 15b shows the EHT variant Common Info field format. The EHT variant Common Info field format may also be referred to as the structure of the EHT variant Common Info field.

Referring to FIG. 15b, the EHT variant Common Info field may include various subfields. For example, the EHT variant Common Info field may include a trigger type subfield (B0-B3, 4 bits), a reserved subfield (B63, 1 bit), and/or a trigger dependent Common Info subfield (variable bit size).

In FIGs. 15a and 15b, the trigger type subfield value of the HE variant Common Info field and/or the EHT variant Common Info field may indicate a trigger frame variant as shown in <Table 1>:

**[Table 1]**

| **Trigger type subfield value** | **Trigger frame variant** |
|---|---|
| 0 | Basic |
| 1 | Beamforming Report Poll (BFRP) |
| 2 | MU-BAR |
| 3 | MU-RT |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

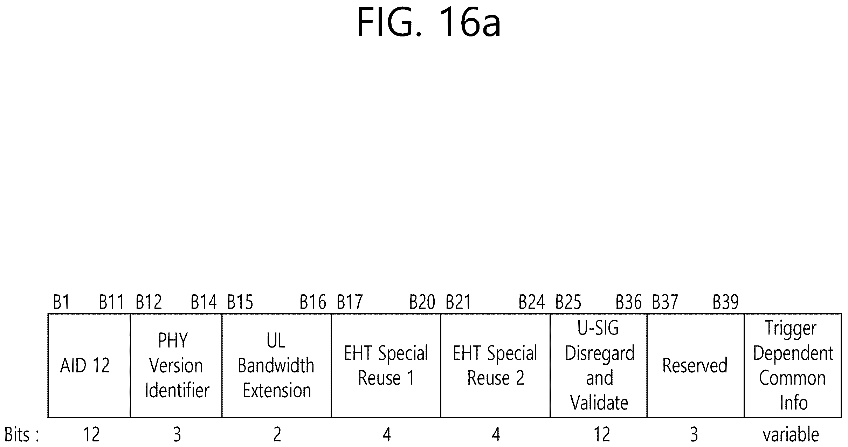

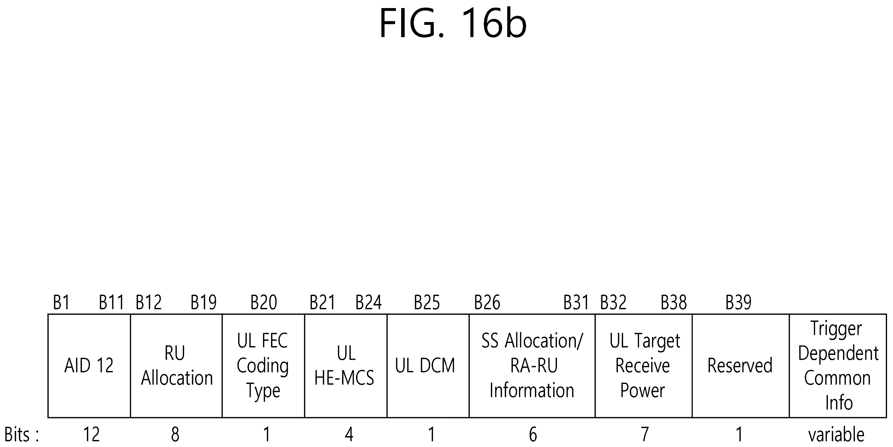

FIG. 16a shows an HE variant User Info field format. FIG. 16b shows the EHT variant User Info field format. The HE/EHT variant User Info field format may also be referred to as the structure of the HE/EHT variant User Info field. Referring to FIG.s 16a and 16b, the HE/EHT variant User Info field may include various subfields. Below, channel sounding is described as an example of channel measurement.

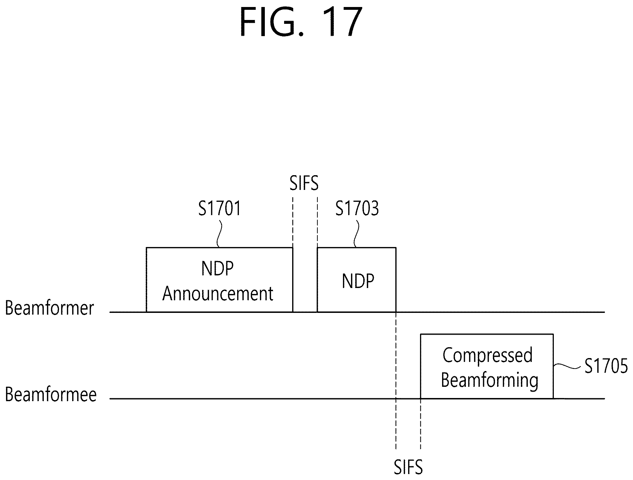

FIG. 17 shows an example of a channel sounding procedure.

Referring to FIG. 17, channel sounding is initiated by a first STA, called a beamformer. Channel sounding may be performed between the beamformer and a second STA, called a beamformee. For DL channel measurement, the beamformer may be an AP STA, and the beamformee may be a non-AP STA. For UL channel measurements, the beamformer may be a non-AP STA, and the beamformee may be an AP STA.

In step S1701, the beamformer may initiate channel sounding by transmitting a Null Data Packet Announcement (NDPA) frame, which is used to control the channel and identify the beamformee, to the beamformee. The number of beamformees may be one or more. If the number of beamformees is N, the NPDA may include N STA information fields. Each STA information field is associated with a corresponding beamformee and may include information for the corresponding beamformee (e.g., information identifying the beamformee). At least one beamformee performs a response to the NDPA frame. STAs other than the beamformee may defer channel access until the sounding sequence (i.e., sequential frame exchange for sounding) is completed.

In step S1703, after the NDPA frame is transmitted, the beamformer may transmit a Null Data Packet (NDP) frame. The NDP is defined based on the VHT/HE/EHT/UHR PPDU. For example, the NDP may be a PPDU in which a data field corresponding to a payload signal (or MAC data) is omitted from the VHT/HE/EHT/UHR PPDU. Since the NDP includes multiple OFDM training fields, the beamformee receiving the NDP may calculate a channel response. In addition, the NDP may be used to calculate a steering matrix (e.g., a Q matrix) related to beamforming. In some cases, multiple NDPs may be configured for multiple beamformees. As illustrated, an interframe space of Short Interframe Space (SIFS) may exist between the NDPA frame and the NDP frame. That is, an NDP frame may be transmitted after to SIFS has elapsed since the NDPA frame is transmitted.

In step S1705, the beamformee can calculate a feedback matrix/channel quality indicator (CQI) based on the received NDP. In other words, the beamformee can perform channel measurements based on the received NDP and obtain channel information including the results of the channel measurements (e.g., the feedback matrix/CQI). The feedback matrix, expressed by various names such as V matrix, enables the beamformer to calculate a steering matrix. The beamformee transmits a feedback/report signal containing the channel information to the beamformer. The beamformer can calculate a steering matrix based on the feedback/report signal, for example, for communications directed to the beamformee. The channel information and/or the feedback/report signal may include a compressed beamforming signal, as illustrated.

If only one beamformee exists, the beamformee can transmit the feedback/report signal to the beamformer after SIFS has elapsed since receiving the NDP.

When multiple beamformees exist, they can sequentially transmit feedback/report signals. The beamformee associated with the first STA information field among the STA information fields can transmit the feedback/report signal to the beamformer after SIFS has elapsed since receiving the NDP, without receiving a separate polling frame. Conversely, the remaining beamformees can transmit the feedback/report signal to the beamformer after a SIFS has elapsed since receiving a polling frame (e.g., a BFRP frame) transmitted by the beamformer. Here, the polling frame can be transmitted after SIFS has elapsed since the feedback/report signal is transmitted/received.

When multiple beamformees exist, multiple beamformees can simultaneously transmit feedback/report signals through RUs allocated via a trigger frame. For example, the trigger frame can be a beamforming report poll (BFRP) trigger frame. A BFRP trigger frame may include information for identifying beamformees (e.g., AID/12 LSB) and information for frequency resources (i.e., RUs) for each beamformee to transmit feedback/report signals. Beamformees identified by the BFRP trigger frame may transmit feedback/report signals (simultaneously/together) based on the corresponding RU resources. The BFRP trigger frame may be transmitted after SIFS has elapsed since the NDP is transmitted/received. The feedback/report signals of multiple beamformees may be transmitted after SIFS has elapsed since the BFRP trigger frame is transmitted/received.

Meanwhile, in next-generation wireless LAN systems, signal transmission and reception using relays (i.e., relay operation) may be considered to ensure stable and/or reliable signal transmission regardless of the location of STAs within the BSS, increase signal transmission coverage, and/or eliminate signal inaccessibility. For relay operation, a relay STA may be required. A relay STA refers to a device that receives a PPDU (e.g., the aforementioned HT/VHT/HE/EHT/UHR-PPDU) from a first STA (e.g., an AP STA) and relays the received PPDU to a second STA (e.g., a non-AP STA).

The relay function/operation/procedure performed by the relay STA in the present disclosure may be implemented in various ways. For example, the relay STA may receive a first PPDU from the first STA and decode a portion of the received first PPDU. For example, the relay STA can decode the PHY preamble (e.g., L-SIG, U-SIG, EHT-SIG, etc.) included in the first PPDU, and decode a part of the MAC frame (e.g., MAC header) included in the data field of the first PPDU. Through this, the relay STA can obtain the frame body of the MAC frame of the first PPDU, and can relay the frame body of the MAC frame to the second STA without performing additional decoding on the frame body of the obtained MAC frame. That is, the relay STA can encode/generate/configure the second PPDU based on the body of the MAC frame, and transmit the second PPDU to the second STA. As a result, the first PPDU and the second PPDU can include the same payload or MAC frame body. For example, the PHY preamble and/or MAC header of the first PPDU received by the relay STA may be identical to or different from the PHY preamble and/or MAC header of the second PPDU transmitted by the relay STA. For example, the relay STA may not decode the MAC frame (i.e., the frame body) other than the MAC header of the first PPDU, or may decode only a portion of it.

The relay STA of the present disclosure may be implemented in various ways.

First, the relay STA of the present disclosure may be implemented in a manner that includes a Relay-STA and a Relay-AP. That is, the relay STA may include a Relay STA that communicates with the Root AP and a Relay AP that communicates with non-APs. In this case, an upper BSS may be defined between the Root AP and the relay STA, and a lower BSS may be defined between the Relay AP and the non-AP. A relay function may be implemented between the Relay STA and the Relay AP within the relay STA.

Second, the relay STA of the present disclosure may be a terminal/device that operates as a non-AP STA (i.e., a user STA). That is, the relay STA of the present disclosure may belong to a BSS defined/configured by an AP STA without newly defining/configuring a lower BSS by itself. The AP STA may assign an ID (e.g., AID) to the relay STA in the same manner as a conventional non-AP STA (i.e., a user STA). That is, the relay STA may be identified like a typical non-AP STA (i.e., a user STA) and may additionally support the relay function/operation/procedure described above. That is, the relay STA may receive a first DL PPDU from an AP STA, obtain a MAC frame body of the first DL PPDU, and relay a second DL PPDU including the obtained MAC frame body to a neighboring non-AP STA. Additionally, the relay STA may receive a first UL PPDU from a neighboring non-AP STA, obtain the MAC frame body of the first UL PPDU, and relay a second UL PPDU including the obtained MAC frame body to the AP STA.

Thirdly, the relay STA of the present disclosure may be implemented based on multiple links. For example, the relay function/operation/procedure described above may be performed based on multiple links, such as those described in FIG. 4 of the present disclosure. That is, a specific non-AP MLD may operate as a relay STA, and in this case, the first PPDU may be received via the first link included in the non-AP MLD. The relay STA may relay the first PPDU received via the first link to another STA via the second link. For example, the first link may operate as a DL link (or UL link), and the second link may operate as a UL link (or DL link).

To facilitate relay implementation and reduce operational complexity, next-generation wireless LAN systems may consider AP-controlled relay transmission/operation.

In this disclosure, an AP-controlled relay STA is referred to as an "AP-controlled Relay STA," or simply ACRS. The ACRS performs relay transmission for data received from an AP within a BSS. The AP may control the ACRS for relay operation. That is, based on control information received from the AP, the ACRS may transmit signals received from the AP to end-users/STAs, or transmit signals received from multiple non-AP STAs to the AP.

For example, the ACRS may be an independent relay device that only performs relay transmission. Alternatively, the ACRS may be a non-AP STA that supports relay operation.

In this disclosure, the operations performed by the ACRS may be performed not only by the ACRS, but also by various relay STAs (e.g., relay STAs not controlled by the AP).

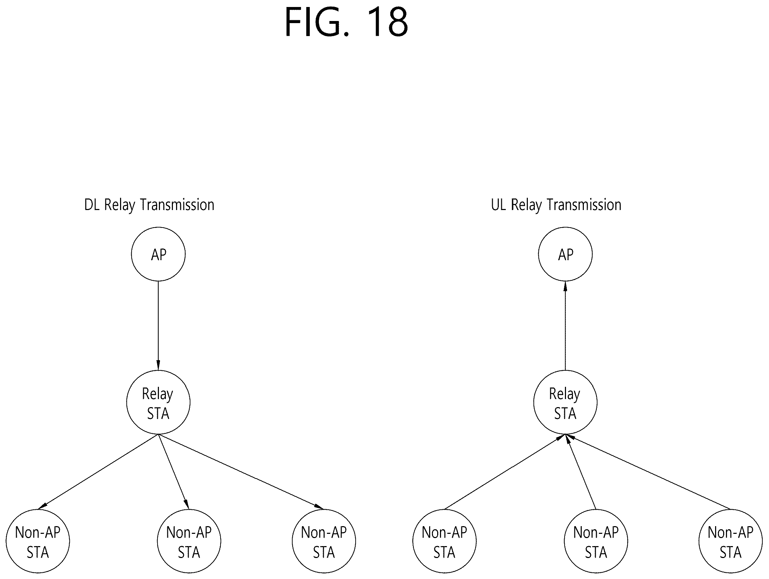

FIG. 18 shows an example of relay transmission/operation.

Referring to FIG. 18, in a next-generation wireless LAN system, a relay STA can transmit signals to one or more non-AP STAs located at the BSS edge or extended range, or receive signals from non-AP STAs, through relay operation. Relay operation can be performed using two links (e.g., from the AP to the relay STA and from the relay STA to the non-AP STA (DL relay transmission), or from the non-AP STA to the relay STA and from the relay STA to the AP (UL relay transmission)). Since the two links each have different channel conditions, channel information for both links may be required to efficiently perform relay operation using the two links.

Therefore, the present disclosure proposes a procedure for performing channel estimation on the relay channel (i.e., the channel between the relay STA and the non-AP STA) to efficiently perform relay transmission, and a signaling method/device for this relay channel estimation procedure.

In this disclosure, the link between a relay STA and a non-AP STA may be referred to as a "relay link," but this is merely an example, and the relay link may be expressed differently. Furthermore, in this disclosure, the terms "relay link" and "relay channel" may be used interchangeably.

In this disclosure, the terms "channel measurement" and "channel estimation" may be used interchangeably.

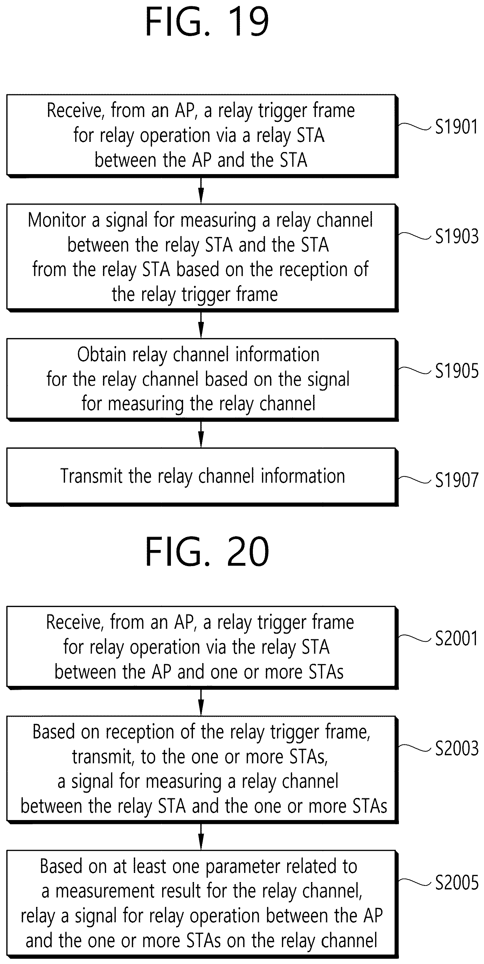

FIG. 19 shows an example of a method performed by a non-AP STA for relay channel estimation according to an embodiment of the present disclosure.

Referring to FIG. 19, in step S1901, the non-AP STA may receive, from an AP, a relay trigger frame for relay operation via a relay STA between the AP and the STA.

In step S1903, the non-AP STA may monitor a signal for measuring a relay channel between the relay STA and the STA from the relay STA based on the reception of the relay trigger frame.

In step S1905, the non-AP STA may obtain relay channel information for the relay channel based on the signal for measuring the relay channel.

In step S1907, the non-AP STA may transmit the relay channel information.

According to various embodiments, the relay trigger frame may comprise information indicating that a corresponding trigger frame is a trigger frame for relay operation.

According to various embodiments, the information may comprise a trigger type subfield in the relay trigger frame.

According to various embodiments, based on the information comprising the trigger type subfield, a trigger dependent Common Info field of the relay trigger frame may indicate at least one of a polling trigger, a relay transmission trigger, a sounding trigger, or a reporting trigger.

According to various embodiments, the information may comprise one or more reserved bits in a Common Info field of the relay trigger frame. The one or more reserved bits may be used as a relay transmission subfield.

According to various embodiments, the one or more reserved bits may comprise bits common to a high-efficiency (HE) variant Common Info field and an extreme high throughput (EHT) variant Common Info field.

According to various embodiments, the one or more reserved bits may comprise at least one reserved bit for an extreme high throughput (EHT) variant Common Info field.

According to various embodiments, the relay trigger frame may comprise role information indicating reception or transmission of the signal for measuring the relay channel. The non-AP STA may monitor the signal for measuring the relay channel from the relay STA based on the role information indicating reception of the signal for measuring the relay channel.

According to various embodiments, the non-AP STA may receive a feedback request frame from the AP. The non-AP STA may transmit the relay channel information in response to receiving the feedback request frame.

According to various embodiments, the relay channel information is transmitted to the AP via the relay STA.

According to various embodiments, the signal for measuring the relay channel may be transmitted after a short interframe space (SIFS) since the relay trigger frame is transmitted.

According to various embodiments, the signal for measuring the relay channel may comprise a null data packet (NDP). The relay channel information may comprise a measurement result (e.g., feedback matrix/CQI/compressed beamforming signal) for the relay channel.

FIG. 20 shows an example of a method performed by a relay STA for relay channel estimation according to an embodiment of the present disclosure.

Referring to FIG. 20, in step S2001, the relay STA may receive, from an AP, a relay trigger frame for relay operation via the relay STA between the AP and one or more STAs.

In step S2003, based on reception of the relay trigger frame, the relay STA may transmit, to the one or more STAs, a signal for measuring a relay channel between the relay STA and the one or more STAs.

In step S2005, based on at least one parameter (e.g., MCS) related to a measurement result for the relay channel, the relay STA may relay a signal for relay operation between the AP and the one or more STAs on the relay channel.

According to various embodiments, the relay trigger frame may comprise information indicating that a corresponding trigger frame is a trigger frame for relay operation.

According to various embodiments, the relay trigger frame may comprise role information indicating reception or transmission of the signal for measuring the relay channel. The relay STA may transmit the signal for measuring the relay channel to the one or more STAs based on the role information indicating transmission of the signal for measuring the relay channel.

According to various embodiments, the signal for measuring the relay channel may be transmitted after a short interframe space (SIFS) since the relay trigger frame is transmitted.

Hereinafter, a detailed implementation of relay channel estimation is described.

### I. Structure of the trigger frame for relay operation/relay channel estimation (hereinafter referred to as the "relay trigger frame")

Channel measurement/channel estimation for relay links for relay operation can be initiated by the AP, and the trigger frame can be used for channel measurement for the relay link.

Unlike the basic trigger frame, the trigger frame used for relay transmission/operation (i.e., the relay trigger frame) does not solicit a TB PPDU and can be used for other purposes. A method for distinguishing trigger frames used during relay transmission/operation is proposed.

In some implementations, the relay trigger frame transmitted by the AP for relay transmission/operation can be newly defined. For example, reserved bits in the trigger type subfield of the trigger frame can be used to newly define the relay trigger frame. For example, one of the reserved bits, value 9, can be used to newly define the relay trigger frame, as shown in <Table 2> below. In other words, value 9 among the reserved bits of the trigger type subfield can indicate whether the trigger frame is a relay trigger frame.

**[Table 2]**

| Trigger Type subfield value | Trigger frame variant |
|---|---|
| ... | ... |
| 8 | Ranging/Sensing |
| 9 | Relay |
| 10-15 | Reserved |

The reserved bit (i.e., value 9) described above is exemplary, and other reserved bits may be used to indicate whether the trigger frame is a relay trigger frame. If a new trigger frame type for relay transmission/operation is defined as described above, the Common Info field of the relay trigger frame may include a Trigger Dependent Common Info field. The Trigger Dependent Common Info field may include a Trigger Subtype field to indicate a subvariant of the relay trigger frame. The Trigger Subtype field may consist of 2/3/4 bits.

For example, the Trigger Subtype field may consist of 2 bits. A 2-bit Trigger Subtype field may indicate poll trigger / relay transmission trigger / sounding trigger / report trigger, as shown in <Table 3> below. Table 2 shows the encoding of the Trigger Subtype (sub)field of the relay trigger frame.

**[Table 3]**

| Trigger subtype subfield value | Relay trigger frame subvariant |
|---|---|
| 0 | Poll |
| 1 | Relay transmission |
| 2 | Sounding |
| 3 | Report |

In some implementations, a relay trigger frame can be defined based on a conventional trigger frame. In this case, the reserved bits in the Common Info field of the trigger frame can be used to indicate that the trigger frame is a relay trigger frame. For example, considering both the HE variant and the EHT variant that define trigger frames used in relay transmission/operation, the reserved bit corresponding to B63 in the Common Info field of the trigger frame can be used to indicate a relay trigger frame. B63 can be defined as a relay transmission subfield, and when the B63 bit is set to 1, it can indicate that the trigger frame is used for relay transmission. <Table 4> below shows the structure of the HE variant Common Info field for indicating a relay trigger frame using the reserved bit B63, and <Table 5> shows the structure of the EHT variant Common Info field for indicating a relay trigger frame using the reserved bit B63:

**[Table 4]**

| | B53 | B54 | B62 | B63 |
|---|---|---|---|---|
| ... | Doppler | UL HE-SIG-A2Reserved | | Relay Transmission |
| Bits: | 1 | 9 | | 1 |

**[Table 5]**

| | B55 | B56 | B62 | B63 |
|---|---|---|---|---|
| ... | Special User Info Field Flag | EHTReserved | | Relay Transmission |
| Bits: | 1 | 7 | | 1 |

In <Table 3> and <Table 4>, the Relay Transmission subfield can indicate that the corresponding trigger frame is used for relay transmission/operation (i.e., the corresponding trigger frame is a relay trigger frame). As described above, setting the reserved bit B63 as the relay transmission subfield to indicate a relay trigger frame is exemplary, and other subfields may be used. For example, considering the next-generation wireless LAN standard and EHT, the reserved bits (e.g., any one of B22, B26, B53, and B63) of the EHT variant Common Info field can be used to indicate a relay trigger frame. That is, any one of the reserved bits B22, B26, B53, and B63 can indicate that the corresponding trigger frame is a trigger frame transmitted by the AP for relay transmission/operation (i.e., a relay trigger frame).

As described above, by utilizing the reserved bits of the Common Info field, the HE variant format and/or the EHT variant format can be used during relay transmission/operation. Therefore, relay transmission for HE and/or EHT non-AP STAs supporting relay transmission can be performed without defining a new trigger frame.

Channel estimation for a relay link using a trigger frame for relay transmission/operation (i.e., a relay trigger frame) defined as described above can be performed as follows:

### II. Channel measurement/estimation method for a relay link

In various embodiments, DL channel estimation for a relay link can be performed, and DL channel information including the result of the DL channel estimation can be reported.

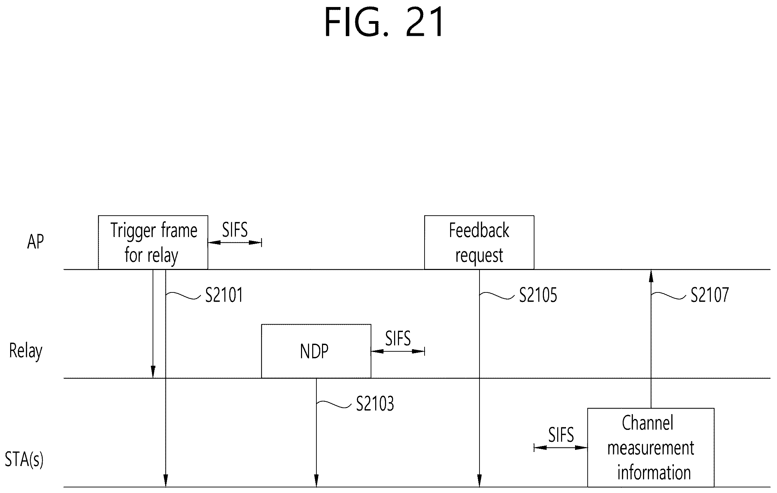

FIG. 21 shows a first example of a procedure for reporting DL channel information according to an embodiment of the present disclosure.

Referring to FIG. 21, in step S2101, an AP can transmit a relay trigger frame to a relay STA performing relay operation and a non-AP STA for channel estimation/measurement of the relay link/channel during relay transmission.

In various embodiments, the User Info field of a relay trigger frame (or, for example, a sounding sub-variant trigger frame) transmitted by an AP may include at least one of the following subfields, including a subfield indicating information for an STA transmitting a Null Data Packet (NDP) for channel measurement/estimation and an STA receiving the same:
- AID (12 bits): This can indicate the STA ID of a relay STA and/or non-AP STA participating in relay operation.
- DL/UL: This can indicate whether channel estimation is performed for the DL or for the UL of the relay link. In the case of DL channel estimation, this subfield can indicate DL.
- TX/RX role indication or relay STA indication: This indicates an STA transmitting NDP for channel estimation/measurement on the relay link and an STA receiving the NDP. This subfield can consist of 1 bit. For example, if the bit value of this subfield is set to 0, this subfield can indicate that the STA operates as a receiver of NDP for relay link channel measurement/estimation. On the other hand, if the bit value of this subfield is set to 1, this subfield can indicate that the STA operates as a transmitter of NDP for relay link channel measurement/estimation. As another example, this subfield may indicate an STA that performs the role of a relay STA. In this case, if the bit value of this subfield is set to 0, this subfield may indicate the role of a non-AP STA during relay transmission/channel estimation. On the other hand, if the bit value of this subfield is set to 1, this subfield may indicate the role of a relay STA during relay transmission/channel estimation. A non-AP STA instructed to perform the role of a relay STA may transmit an NDP after receiving a trigger frame.
- RU Allocation: If the above-described TX/RX Role Indication or Relay STA Indication subfield is set to 1 (i.e., if instructed to act as a sender of an NDP for relay link channel measurement/estimation or instructed to perform the role of a relay STA during relay transmission/channel estimation), this subfield may not be used (reserved). Otherwise (i.e., instructed to act as a receiver of NDP for relay link channel measurement/estimation, or instructed to act as a non-AP STA during relay transmission/channel estimation), this subfield may indicate the subchannel and/or resource to be measured. The RU allocation field may be composed of 9 bits, for example, 1 bit to indicate a (sub)channel unit (resolution) and 8 bits to indicate a (sub)channel. In this case, the 1 bit may be MSB or LSB, and may indicate 20 MHz or 40 MHz as a (sub)channel unit. When the BW is 320 MHz, the 1 bit may be set to indicate 40 MHz. The 8 bits may indicate a (sub)channel to be measured/estimated, and among the 8 bits, the bit corresponding to the (sub)channel to be measured/estimated may be set to 1.
- SS Allocation: This may indicate the number of spatial streams (SS) allocated for measurement for each STA.
- Feedback Type: This may indicate whether SU feedback or MU feedback is performed. For example, in the case of channel measurement for DL, this subfield may be set if the TX/RX Role Indication or Relay STA Indication subfield indicates the RX role or does not indicate the role of a relay STA. Otherwise (i.e., if the TX/RX Role Indication or Relay STA Indication subfield indicates the TX role or indicates the role of a relay STA), this subfield may not be used (reserved). As another example, in the case of channel measurement for UL, this subfield may not be used if the TX/RX Role Indication or Relay STA Indication subfield indicates the TX role or does not indicate the role of a relay STA. Otherwise (i.e., if the TX/RX Role Indication or Relay STA Indication subfield indicates the RX role or the role of a relay STA), this subfield may be set.
- Ng: Indicates a tone grouping value, which may be one of 4/8/6. For example, in case of channel measurement for DL, if the TX/RX Role Indication or Relay STA Indication subfield indicates the RX role or does not indicate the role of a relay STA, this subfield may be set. Otherwise (i.e., if the TX/RX Role Indication or Relay STA Indication subfield indicates the TX role or the role of a relay STA), this subfield may not be used (reserved). As another example, in case of channel measurement for UL, if the TX/RX Role Indication or Relay STA Indication subfield indicates the TX role or does not indicate the role of a relay STA, this subfield may not be used. Otherwise (i.e., if the TX/RX Role Indication or Relay STA Indication subfield indicates the RX role or indicates the role of a relay STA), this subfield may be set.
- Codebook size: It can indicate codebook configuration information according to the feedback type. For example, in case of channel measurement for DL, if the TX/RX role indication or relay STA indication subfield indicates the RX role or does not indicate the role of the relay STA, this subfield may be set. Otherwise (i.e., if the TX/RX role indication or relay STA indication subfield indicates the TX role or does not indicate the role of the relay STA), this subfield may not be used (reserved). As another example, in case of channel measurement for UL, if the TX/RX role indication or relay STA indication subfield indicates the TX role or does not indicate the role of the relay STA, this subfield may not be used. Otherwise (i.e., if the TX/RX role indication or relay STA indication subfield indicates the RX role or does indicate the role of the relay STA), this subfield may be set.

As another example, the role of a relay STA or a non-AP STA, or the role of an STA transmitting an NDP or an STA receiving an NDP (TX or RX) may be implicitly indicated through the order of the User Info fields included in a trigger frame (i.e., a relay trigger frame) transmitted to perform channel measurement on a relay link for relay transmission/operation. In order to indicate which STA is a relay STA or an STA transmitting NDP (i.e., an NDP transmitting STA, i.e., a TX STA), the first User Info field of the relay trigger frame transmitted by the AP may include information (e.g., an AID) for the corresponding STA. That is, the first User Info field transmitted through the relay trigger frame may include information (e.g., an AID) for the relay STA or an STA transmitting NDP (i.e., a TX STA) when estimating a channel for the relay link. In this case, the remaining User Info fields except for the first User Info field transmitted through the relay trigger frame may indicate STA(s) that receive NDP (i.e., RX STA(s)) and perform channel measurement and/or include information (e.g., an AID) for the corresponding STA(s). In this way, when the TX/RX role for relay link channel measurement or the role of relay STA/non-AP STA is implicitly indicated through the order of the User Info fields, this has the advantage of not requiring separate signaling.

In step S2103, a relay STA that has been instructed to act as an STA transmitting an NDP through the TX/RX role indication or relay STA indication subfield in the relay trigger frame or through the first User Info field in the relay trigger frame may transmit an NDP to non-AP STA(s). The NDP may be transmitted after SIFS since the transmission/reception of the relay trigger frame. The non-AP STA(s) that receive the NDP may perform channel measurement based on the received NDP and obtain channel information including the results of the channel measurement.

In step S2105, the AP may transmit a feedback request frame to the non-AP STA(s). The feedback request frame may be transmitted after SIFS since the NDP is transmitted/received.

In step S2107, the non-AP STA(s) may transmit channel (measurement) information to the AP. The channel (measurement) information may be transmitted after SIFS since the transmission/reception of the feedback request frame.

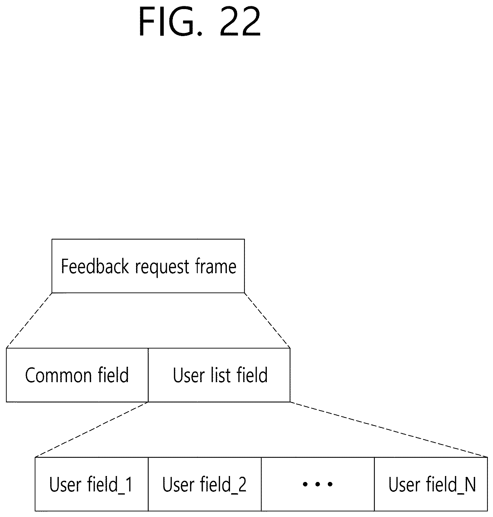

In various embodiments, a feedback request frame may solicit transmission of feedback information (i.e., channel information) and may have a structure as shown in FIG. 22.

FIG. 22 shows the structure of a feedback request frame according to an embodiment of the present disclosure.

Referring to FIG. 22, the feedback request frame may include a Common Info field (or common field) and a User Info list field (or user list field). The User Info list field may include one or more User Info fields (or user fields), and may include, for example, N User Info fields (User Info field_1, User Info field _2, ... User Info field N).

The User Info field of the feedback request frame may be configured for each of non-AP STAs and relay STAs. The feedback request frame and/or the User Info field of the feedback request frame may include at least one of the following subfields:
- Feedback relay indication: An indication of relay transmission for measured channel information. If the feedback relay indication bit is set to 1, this subfield may indicate relay transmission (i.e., a non-AP STA transmits feedback information/channel information to a relay STA, and the relay STA transmits feedback information/channel information to an AP). On the other hand, if the feedback relay indication bit is set to 0, this subfield can indicate direct transmission (i.e., the non-AP STA directly transmits feedback information/channel information to the AP). Through this subfield, the non-AP STA transmitting the feedback information/channel information can determine whether the feedback information/channel information should be transmitted to the relay STA or to the AP. In addition, through this subfield, the relay STA can identify and receive the feedback information transmission from the non-AP, and determine whether the received feedback information/channel information should be transmitted to the AP.
- RX ID or Relay STA ID: An ID for the relay STA or intermediate STA that receives the channel information when the non-AP STA transmits the measured channel information.
- RU Allocation: Information for RUs allocated for transmitting feedback information/channel information. RU allocation information can be set for each of non-AP STAs and relay STAs.
- Nss: The number of spatial streams allocated to non-AP STAs/relay STAs when transmitting feedback information/channel information.
- MCS: The MCS index or order used when transmitting feedback.

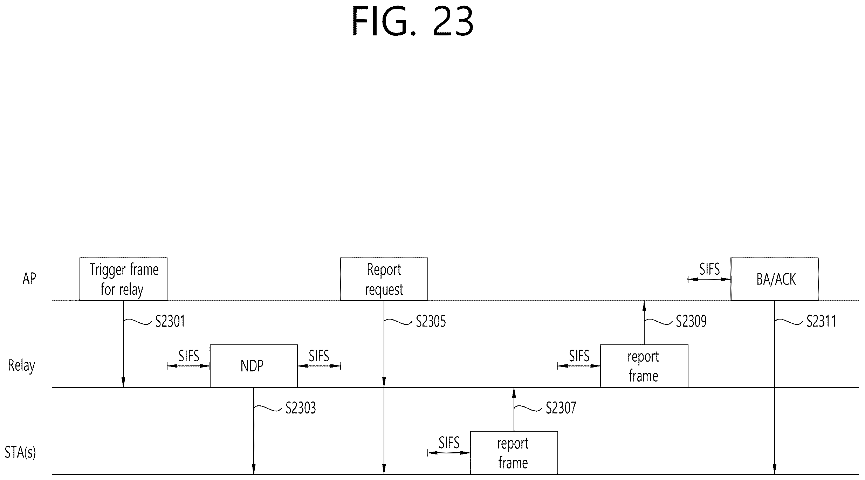

In various embodiments, non-AP STAs that receive a signal or NDP transmitted by a relay STA may transmit measured feedback information (i.e., channel information) to the relay STA, and the relay STA may transmit the received feedback information to the AP. This scenario is described with reference to FIG. 23.

FIG. 23 shows a second example of a procedure for reporting DL channel information according to an embodiment of the present disclosure.

Referring to FIG. 23, in step S2301, the AP may transmit a relay trigger frame to the relay STA performing the relay operation and the non-AP STA for channel estimation/measurement of the relay link/channel during relay transmission. The relay trigger frame and/or the User Info field of the relay trigger frame may include at least one of the subfields described in FIG. 21. Additionally, as described in FIG. 21, the role of a relay STA or a non-AP STA, or the role of an STA transmitting an NDP or an STA receiving an NDP, may be implicitly indicated through the order of the User Info fields included in a trigger frame (i.e., a relay trigger frame) transmitted to perform channel measurement on a relay link for relay transmission/operation.

In step S2303, a relay STA that has been instructed to act as an STA transmitting an NDP through the TX/RX role indication or relay STA indication subfield in the relay trigger frame, or through the first User Info field in the relay trigger frame, may transmit the NDP to non-AP STA(s). The NDP may be transmitted after SIFS since the transmission/reception of the relay trigger frame. The non-AP STA(s) receiving the NDP may perform channel measurement based on the received NDP and obtain channel information including the results of the channel measurement.

In step S2305, the AP may transmit a report request frame/feedback request frame to non-AP STA(s). The User Info field of the report request frame/feedback request frame may include at least one of the subfields described in FIG. 22. The report request frame/feedback request frame may be transmitted after SIFS since the NDP is transmitted/received.

In step S2307, the non-AP STA(s) may transmit a report frame comprising channel information and/or channel information to the relay STA. The report frame comprising channel information and/or channel information may be transmitted after SIFS since the report request frame/feedback request frame is transmitted/received.

In step S2309, the relay STA may transmit a report frame comprising channel information and/or channel information received from the non-AP STA(s) to the AP. The report frame including channel information and/or channel information may be transmitted after SIFS since the report frame including channel information and/or channel information is transmitted/received from the non-AP STA(s).

In step S2311, the AP may transmit a BA/ACK for the report frame including channel information and/or channel information to the non-AP STA(s). The BA/ACK may be transmitted after SIFS since the report frame including channel information and/or channel information is transmitted/received.

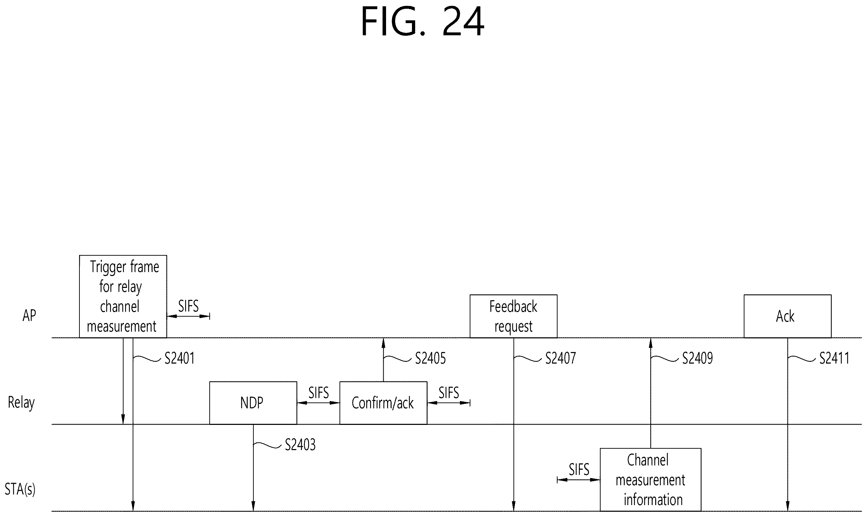

In various embodiments, to ensure transmission of the NDP by the relay STA and/or reception of the NDP by the non-AP STA(s), the relay STA may transmit a confirm frame to the AP after transmitting the NDP, thereby notifying the AP that the NDP triggered by the AP has been transmitted to the non-AP STA(s). For example, an ACK frame may be used as the confirm frame. An AP that receives the confirm frame from a relay STA may transmit a frame requesting channel measurement feedback (i.e., a feedback request frame/report request frame) to a non-AP STA. A procedure using the confirm frame is described in FIG. 24.

FIG. 24 shows a third example of a procedure for reporting DL channel information according to an embodiment of the present disclosure.

Referring to FIG. 24, in step S2401, the AP may transmit a relay trigger frame to a relay STA performing relay operation and a non-AP STA for channel estimation/measurement of a relay link/channel during relay transmission. The relay trigger frame and/or the User Info field of the relay trigger frame may include at least one of the subfields described in FIG. 21. Additionally, as described in FIG. 21, the role of a relay STA or a non-AP STA, or the role of an STA transmitting an NDP or an STA receiving an NDP, may be implicitly indicated through the order of the User Info fields included in the trigger frame (i.e., the relay trigger frame) transmitted to perform channel measurement on the relay link for relay transmission/operation.

In step S2403, a relay STA that has been instructed to act as an STA transmitting an NDP through the TX/RX role indication or relay STA indication subfield in the relay trigger frame, or through the first User Info field in the relay trigger frame, may transmit the NDP to non-AP STA(s). The NDP may be transmitted after SIFS since the transmission/reception of the relay trigger frame. The non-AP STA(s) receiving the NDP may perform channel measurement based on the received NDP and obtain channel information including the results of the channel measurement.

In step S2405, the relay STA may transmit a confirm frame/ACK frame to the AP. Through the confirm frame/ACK frame, the AP can identify that the relay STA has transmitted an NDP to the non-AP STA(s). The confirm frame/ACK frame may be transmitted after SIFS since the NDP is transmitted/received.

In step S2407, the AP may transmit a feedback request frame to the non-AP STA(s). The User Info field of the feedback request frame may include at least one of the subfields described in FIG. 22. The feedback request frame may be transmitted after SIFS since the confirm frame is transmitted/received.

In step S2409, the non-AP STA(s) may transmit channel information to the AP. The channel information may be transmitted after SIFS since the feedback request frame is transmitted/received.

In step S2411, the AP may transmit a BA/ACK for the channel information to the non-AP STA(s). The BA/ACK may be transmitted after SIFS since the channel information is transmitted/received.

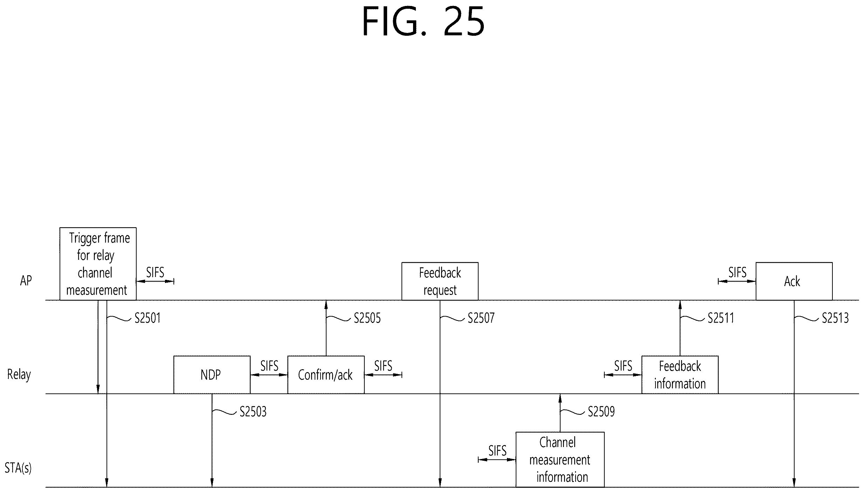

In various embodiments, channel information/feedback information may be transmitted via a relay STA even when a confirm frame is used. Such a scenario is described with reference to FIG. 25.

FIG. 25 shows a fourth example of a procedure for reporting DL channel information according to an embodiment of the present disclosure.

Referring to FIG. 25, in step S2501, an AP may transmit a relay trigger frame to a relay STA performing relay operation and a non-AP STA for channel estimation/measurement of a relay link/channel during relay transmission. The relay trigger frame and/or the User Info field of the relay trigger frame may include at least one of the subfields described in FIG. 21. Furthermore, as described in FIG. 21, the role of a relay STA or a non-AP STA, or the role of an STA transmitting an NDP or an STA receiving an NDP, may be implicitly indicated through the order of the User Info fields included in a trigger frame (i.e., a relay trigger frame) transmitted to perform channel measurement on a relay link for relay transmission/operation.

In step S2503, a relay STA, which has been instructed to act as an STA transmitting an NDP through the TX/RX role indication or relay STA indication subfield in the relay trigger frame or through the first User Info field in the relay trigger frame, may transmit an NDP to non-AP STA(s). The NDP may be transmitted after SIFS since transmission/reception of the relay trigger frame. The non-AP STA(s) receiving the NDP may perform channel measurement based on the received NDP and obtain channel information including the results of the channel measurement.

In step S2505, the relay STA may transmit a confirm frame/ACK frame to the AP. Through the confirm frame/ACK frame, the AP may be informed that the relay STA will transmit an NDP to the non-AP STA(s). The confirm frame/ACK frame may be transmitted after SIFS since the NDP is transmitted/received.

In step S2507, the AP may transmit a feedback request frame to the non-AP STA(s). The feedback request frame (the User Info field) may include at least one of the subfields described in FIG. 22. The feedback request frame may be transmitted after SIFS since the confirm frame is transmitted/received.

In step S2509, the non-AP STA(s) may transmit channel information/feedback information to the relay STA. The channel information/feedback information may be transmitted after SIFS since the feedback request frame is transmitted/received.

In step S2511, the relay STA may transmit channel information/feedback information received from the non-AP STA(s) to the AP. The channel information/feedback information may be transmitted after SIFS since the channel information/feedback information is transmitted/received from the non-AP STA(s).

In step S2513, the AP may transmit a BA/ACK for the channel information/feedback information to the non-AP STA(s). The BA/ACK may be transmitted after SIFS since the channel information/feedback information is transmitted/received.

In various embodiments, UL channel estimation may be performed for the relay link, and UL channel information including the result of the UL channel estimation may be reported.

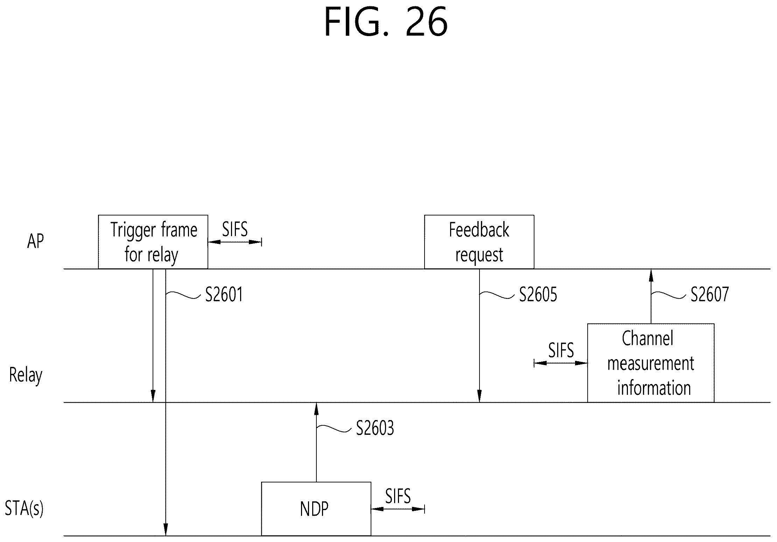

FIG. 26 shows a first example of a procedure for reporting UL channel information according to an embodiment of the present disclosure.

Referring to FIG. 26, in step S2601, the AP may transmit a relay trigger frame for UL channel estimation for the relay link to the relay STA and non-AP STA(s).

In various embodiments, the User Info field of the relay trigger frame (or, for example, a sounding subvariant trigger frame) transmitted by the AP may include at least one of the following subfields:
- AID (12 bits): This may indicate the STA ID of the relay STA and/or non-AP STA participating in the relay operation.
- DL/UL: This subfield may indicate whether channel estimation is performed for the DL or for the UL of the relay link. In case of UL channel estimation, this subfield may indicate UL.
- RX/TX role indication or relay STA indication: An indication for an STA to transmit NDP for channel estimation/measurement of the relay link and an indication for an STA to receive it. For example, this subfield may be set to RX for a relay STA (i.e., the relay STA receives NDP) and may be set to TX for a non-AP STA (i.e., the non-AP STA transmits NDP). As another example, if this subfield is set to a relay STA for a (non-AP) STA, the (non-AP) STA receives NDP, and if this subfield is not set to a relay STA for a (non-AP STA), the (non-AP) STA may transmit NDP.
- RU Allocation: The RU Allocation subfield included in the User Info field in which the RX/TX role indication or relay STA indication subfield is set to RX or relay STA may be unused (reserved) or set to be the same as the BW in which the (relay) trigger frame is transmitted. If the RX/TX role indication or relay STA indication subfield is set to TX, or if the STA is a non-AP STA that is not a relay STA, this subfield may indicate information for an RU for transmitting an NDP. The RU Allocation field may be composed of 9 bits, for example, 1 bit for indicating a (sub)channel unit (resolution) and 8 bits for indicating a (sub)channel. In this case, the 1 bit may be MSB or LSB, and may indicate 20 MHz or 40 MHz as a (sub)channel unit. If the BW is 320 MHz, the 1 bit may be set to indicate 40 MHz. The above 8 bits can indicate a (sub)channel that is the target of channel measurement/estimation, and among the 8 bits, the bit corresponding to the (sub)channel that is the target of channel measurement/estimation can be set to 1.
- SS allocation: The number of spatial streams (SS) allocated for measurement for each STA can be indicated.
- Feedback Type: This can indicate whether SU feedback or MU feedback is performed. For example, in case of channel measurement for UL, if the TX/RX Role Indication or Relay STA Indication subfield indicates the TX role or does not indicate the role of a relay STA, this subfield may not be used. Otherwise (i.e., if the TX/RX Role Indication or Relay STA Indication subfield indicates the RX role or indicates the role of a relay STA), this subfield may be set.
- Ng: Indicates a tone grouping value, which can be one of 4/8/6. For example, in case of channel measurement for UL, if the TX/RX Role Indication or Relay STA Indication subfield indicates the TX role or does not indicate the role of a relay STA, this subfield may not be used. Otherwise (i.e., when the TX/RX role indication or relay STA indication subfield indicates the RX role or the role of a relay STA), this subfield may be set.
- Codebook size: indicates codebook configuration information according to the feedback type. For example, in case of channel measurement for UL, if the TX/RX role indication or relay STA indication subfield does not indicate the TX role or the role of a relay STA, this subfield may not be used. Otherwise (i.e., when the TX/RX role indication or relay STA indication subfield indicates the RX role or the role of a relay STA), this subfield may be set.

As another example, the role of a relay STA or a non-AP STA, or the role of an STA transmitting an NDP or an STA receiving an NDP, may be implicitly indicated through the order of the User Info fields included in a trigger frame transmitted to perform UL channel measurement on a relay link for relay transmission/operation (i.e., a relay trigger frame). To indicate which STA is a relay STA or an STA receiving an NDP (i.e., an NDP receiving STA), the first User Info field of the relay trigger frame transmitted by the AP may include information (e.g., an AID) for the corresponding STA. That is, the first User Info field transmitted via the relay trigger frame may include information (e.g., an AID) for the relay STA or the STA receiving an NDP when performing channel estimation on the relay link. In this case, the remaining User Info fields except for the first User Info field transmitted via the relay trigger frame may indicate the STA(s) transmitting the NDP and/or include information (e.g., an AID) for the corresponding STA(s). In this way, when the TX/RX role or the role of relay STA/non-AP STA for relay link channel measurement is implicitly indicated through the order of the User Info field, there is an advantage in that separate signaling is not required.

In step S1103, a non-AP STA that has been instructed to act as an STA transmitting an NDP through the TX/RX role indication or relay STA indication subfield in the relay trigger frame, or through the order of the User Info field in the relay trigger frame, may transmit the NDP to the relay STA. The NDP may be transmitted after SIFS since the transmission/reception of the relay trigger frame. The relay STA receiving the NDP may perform UL channel measurement based on the received NDP and obtain channel information including the results of the channel measurement.

In step S2605, the AP may transmit a feedback request frame to the relay STA. The feedback request frame may be transmitted after SIFS since the transmission/reception of the NDP. The feedback request frame may have a structure as illustrated in FIG. 22 and may include at least one of the subfields described in FIG. 22.

In step S2607, the relay STA may transmit channel information to the AP. The channel information may be transmitted after SIFS since the feedback request frame is transmitted/received.

To determine whether the relay STA has received an NDP from a non-AP STA(s) and/or to ensure NDP transmission by the non-AP STA(s), the relay STA may transmit a confirm frame to the AP after receiving the NDP. For example, the confirm frame may be an ACK frame.

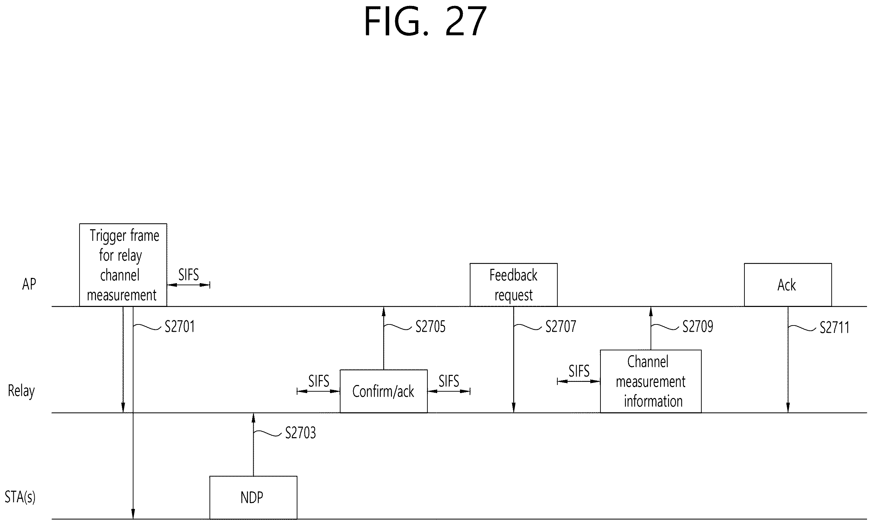

As described above, considering the transmission of a frame (i.e., a confirm frame) to ensure NDP transmission induced by the AP or to ensure reception of a transmitted PPDU (e.g., an NDP), UL channel measurement and reporting may be performed according to the procedure illustrated in FIG. 27.

FIG. 27 shows a second example of a procedure for reporting UL channel information according to an embodiment of the present disclosure.

Referring to FIG. 27, in step S2701, an AP may transmit a relay trigger frame to a relay STA performing relay operation and a non-AP STA for channel estimation/measurement of a relay link/channel during relay transmission. The relay trigger frame and/or the User Info field of the relay trigger frame may include at least one of the subfields described in FIG. 26. Furthermore, as described in FIG. 26, the role of a relay STA or a non-AP STA, or the role of an STA transmitting an NDP or an STA receiving an NDP, may be implicitly indicated through the order of the User Info fields included in a trigger frame (i.e., a relay trigger frame) transmitted to perform channel measurement on a relay link for relay transmission/operation.

In step S2703, a non-AP STA that has been indicated of the role of an STA transmitting an NDP through a TX/RX role indication or relay STA indication subfield in a relay trigger frame or through the order of a User Info field in a relay trigger frame may transmit an NDP to the relay STA. The NDP may be transmitted after SIFS since transmission/reception of the relay trigger frame. The relay STA that has received the NDP may perform UL channel measurement based on the received NDP and obtain channel information including the result of the channel measurement.

In step S2705, the relay STA may transmit a confirm frame/ACK frame to the AP. Through the confirm frame/ACK frame, the AP can identify that the relay STA has received an NDP from a non-AP STA(s). The confirm frame/ACK frame may be transmitted after SIFS since the NDP is transmitted/received.

In step S2707, the AP may transmit a feedback request frame to the relay STA. The feedback request frame may be used to request a channel measurement report. The User Info field of the feedback request frame may include at least one of the subfields described in FIG. 22. The feedback request frame may be transmitted after SIFS since the confirm frame is transmitted/received.

In step S2709, the relay STA may transmit channel information to the AP. The channel information may be transmitted after SIFS since the feedback request frame is transmitted/received.

In step S2711, the AP may transmit a BA/ACK for the channel information to the relay STA. BA/ACK may be transmitted after SIFS since channel information is transmitted/received.

### III. Channel measurement/estimation method for relay link and AP link

Channel estimation for the relay link may be performed in conjunction with channel estimation for the AP link (i.e., the link/channel between the AP and the relay STA). For example, to obtain channel information for the two channels used in relay operation (i.e., the AP link/channel and the relay link/channel), the AP may perform a channel sounding procedure, and the channel sounding procedure may be performed sequentially/continuously for the AP link and the relay link.

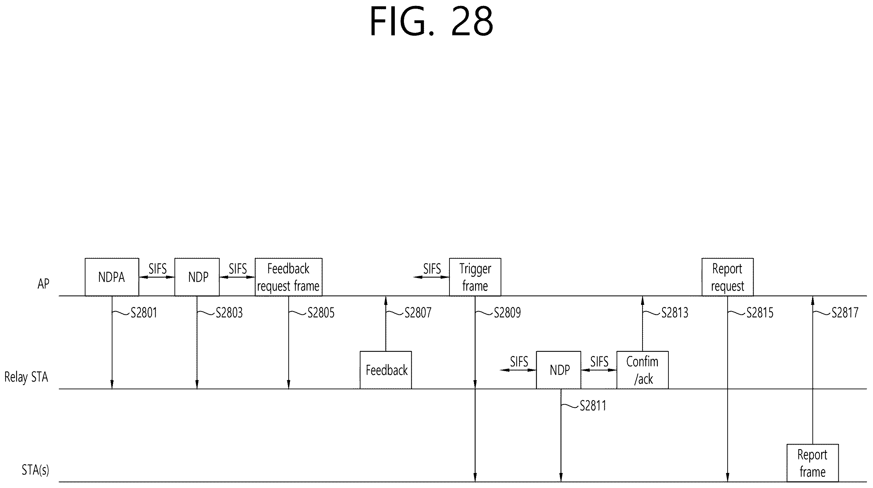

FIG. 28 shows a first example of a procedure for performing DL channel estimation for the AP link and DL channel estimation for the relay link together, according to an embodiment of the present disclosure.

Referring to FIG. 28, in step S2801, the AP may transmit a null data packet announcement (NDPA) to the relay STA for channel estimation for the link/channel between the AP and the relay STA (i.e., the AP link/channel). At this time, the NDPA may include information indicating that the channel estimation is a channel estimation (for the AP link) for relay operation.

In step S2803, the AP may transmit the NDP to the relay STA. The NDP may be transmitted after SIFS since the NDPA is transmitted/received. The relay STA may perform channel measurement for the AP link based on the NDP and obtain channel information including the results of the channel measurement.

In step S2805, the AP may transmit a feedback request frame to the relay STA. The feedback request frame may be transmitted after SIFS or X interval since the NDP is transmitted/received. The X interval may be set to a value greater than the SIFS and less than the AIFS or DIFS to ensure processing time for the relay STA to estimate the channel and/or obtain channel information. To ensure processing time for the relay STA to perform channel estimation, the packet extension (PE) of the NDP transmitted by the AP may be set to be long. For example, the PE of the NDP may be set to one of the values 8/16/20us.

In step S2807, the relay STA that received the feedback request frame from the AP may transmit channel information for the AP link to the AP. The channel information for the AP link may be transmitted after SIFS since the feedback request frame is transmitted/received.

In step S2809, the AP that received the channel information for the AP link may transmit a trigger frame (i.e., a relay trigger frame) to the relay STA and non-AP STA(s) to perform channel estimation for the relay link. The relay trigger frame and/or the User Info field of the relay trigger frame may include at least one of the subfields described in FIG. 21. Furthermore, as described in FIG. 21, the role of the relay STA or non-AP STA, or the role of the STA transmitting the NDP or the STA receiving the NDP, may be implicitly indicated through the order of the User Info fields included in the relay trigger frame. A relay trigger frame may be transmitted after SIFS since channel information for the AP link is transmitted/received.

In step S2811, a relay STA that receives a trigger frame (i.e., a relay trigger frame) transmitted by an AP may transmit an NDP to non-AP STA(s) using the information contained in the trigger frame. At this time, the non-AP STA(s) that received the trigger frame transmitted by the AP may identify the relay STA's NDP transmission based on information in the received trigger frame (e.g., the TX/RX role indication or relay STA indication subfield in the frame, or the order of the User Info field in the relay trigger frame). To ensure sufficient channel measurement processing time for the non-AP STA, the PE of the NDP transmitted over the relay link may also be set to a long value. For example, the PE may be set to one of 8/16/20 us. The non-AP STA(s) may perform channel measurement based on the NDP and obtain channel information including the results of the channel measurement. The NDP may be transmitted after SIFS since the relay trigger frame is transmitted/received.

In step S2813, to ensure that the non-AP STA receives the NDP, the relay STA may transmit a confirm frame/ACK frame to the AP after transmitting the NDP. The confirm frame/ACK frame may indicate to the AP that the relay STA has transmitted the NDP and/or that the non-AP STA(s) have received the NDP. The confirm frame/ACK frame may be transmitted after SIFS since the NDP is transmitted/received.

In step S2815, the AP, having received the confirm frame/ACK frame from the relay STA, may transmit a feedback request frame to the non-AP STA(s) to request channel information for the relay link measured by the non-AP STA(s). The feedback request frame may have a structure as described in FIG. 22 and may include at least one of the subfields as described in FIG. 22. The feedback request frame may be transmitted after SIFS since the confirm frame/ACK frame is transmitted/received.

In step S2817, the non-AP STA(s) that received the report request (i.e., the feedback request frame) from the AP may transmit channel information of the measured relay link to the AP. Here, the channel information for the relay link may be transmitted directly from the non-AP STA(s) to the AP or may be transmitted through the relay STA. The channel information may be transmitted after SIFS since the report request (i.e., the feedback request frame) is transmitted/received.

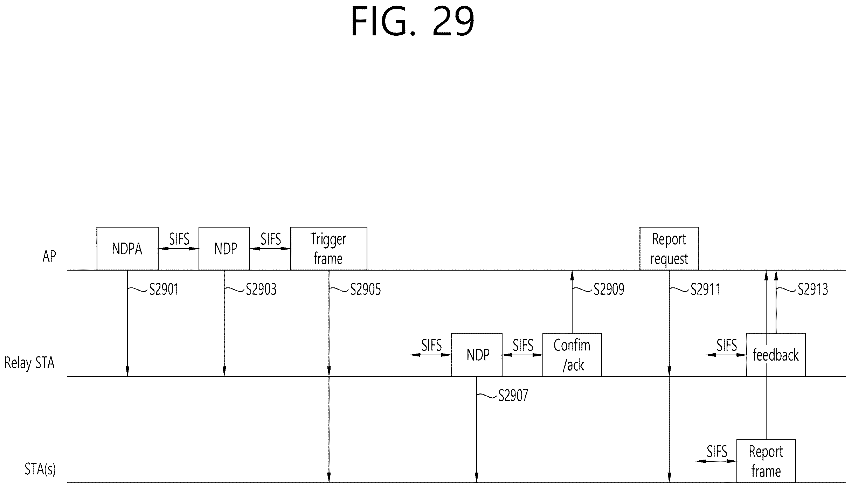

FIG. 29 shows a second example of a procedure for simultaneously performing DL channel estimation for an AP link and DL channel estimation for a relay link, according to an embodiment of the present disclosure.

Referring to FIG. 29, in step S2901, the AP may transmit an NDPA to the relay STA for channel estimation for a link/channel (i.e., an AP link/channel) between the AP and the relay STA. The NDPA may include information indicating that the channel estimation is a channel estimation (for the AP link) for relay operation.

In step S2903, the AP may transmit an NDP to the relay STA. The NDP may be transmitted after SIFS since the NDPA is transmitted/received. The relay STA may perform channel measurement for the AP link based on the NDP and obtain channel information including the results of the channel measurement.

In step S2905, after transmitting the NDP, the AP may transmit a trigger frame (i.e., a relay trigger frame) for channel estimation for the relay link to the relay STA and non-AP STA(s). The relay trigger frame and/or the User Info field of the relay trigger frame may include at least one of the subfields as described in FIG. 21. In addition, as described in FIG. 21, the role of the relay STA or the non-AP STA, or the role of the STA transmitting the NDP or the STA receiving the NDP, may be implicitly indicated through the order of the User Info fields included in the relay trigger frame. The relay STA and non-AP STA(s) that receive the relay trigger frame may be informed that channel estimation for the relay link is performed. The relay trigger frame may be transmitted after SIFS or X interval since the NDP is transmitted/received. The above X interval is set to a value greater than SIFS and less than AIFS or DIFS, thereby ensuring the processing time for the relay STA to estimate the channel and/or obtain channel information. To ensure the processing time for the relay STA to perform channel estimation, the packet extension (PE) of the NDP transmitted by the AP may be set to a long value. For example, the PE of the NDP may be set to one of the values 8/16/20us.

In step S2907, after receiving the trigger frame (i.e., the relay trigger frame), the relay STA may transmit the NDP to non-AP STA(s). To ensure the non-AP STA's channel measurement processing time, the PE of the NDP transmitted through the relay link may also be set to a long value. For example, the PE may be set to one of the values 8/16/20us. The non-AP STA(s) may perform channel measurement based on the NDP and obtain channel information including the results of the channel measurement. The NDP may be transmitted after SIFS since the relay trigger frame is transmitted/received.

In step S2909, to ensure that the non-AP STA receives the NDP, the relay STA may transmit a confirm frame/ACK frame to the AP after the NDP transmission. The confirm frame/ACK frame may indicate to the AP that the relay STA has transmitted the NDP and/or that the non-AP STA(s) have received the NDP. The confirm frame/ACK frame may be transmitted after SIFS since the NDP is transmitted/received.

In step S2911, the AP, having received the confirm frame/ACK frame from the relay STA, may transmit a feedback/report request frame to the relay STA and non-AP STA(s) for feedback on channel measurements (i.e., channel measurements for the AP link and/or channel measurements for the relay link). The feedback/report request frame may have a structure as described in FIG. 22 and may include at least one of the subfields as described in FIG. 22. The feedback/report request frame may be transmitted after SIFS since the confirm frame/ACK frame is transmitted/received.

In step S2913, the relay STA and non-AP STA(s) that received the feedback/report request frame from the AP may transmit channel information to the AP based on the information included in the feedback/report request frame. That is, the relay STA may transmit channel information for the AP link to the AP, and the non-AP STA(s) may transmit channel information for the relay link to the AP (via the relay STA). In some implementations, the procedure for feedback/transmitting channel information to the AP may be performed for each of the relay STA and non-AP STA(s). In some implementations, the channel information for the relay link measured by the non-AP STA(s) may be transmitted to the relay STA, and the relay STA may transmit channel information for the relay link to the AP. At this time, the feedback information transmitted by the relay STA to the AP may include at least one of channel information for the AP link measured by the relay STA or channel information for the relay link received from non-AP STA(s).

In various embodiments, channel estimation for relay operation may be performed first for the relay link and then for the AP link. That is, after the channel estimation procedure for the relay link is performed, the channel estimation procedure for the AP link may be performed continuously/sequentially.

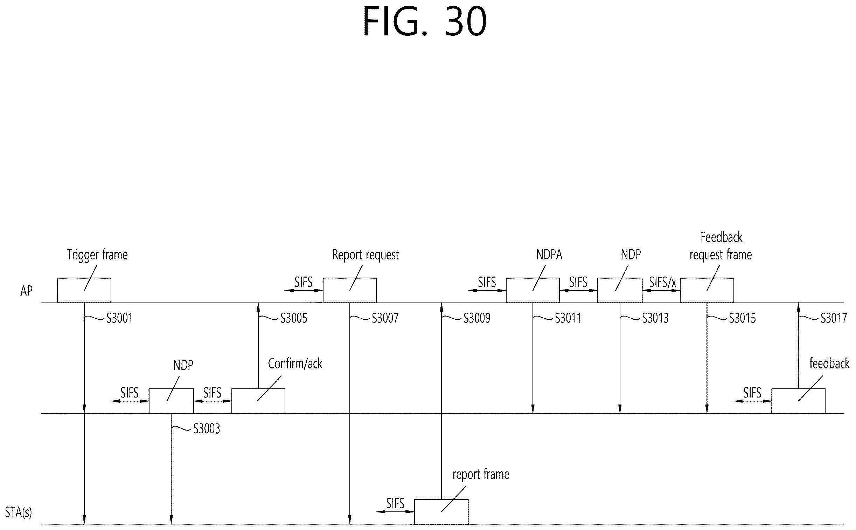

FIG. 30 shows a third example of a procedure for simultaneously performing DL channel estimation for an AP link and DL channel estimation for a relay link, according to an embodiment of the present disclosure.

Referring to FIG. 30, in step S3001, an AP may transmit a trigger frame (i.e., a relay trigger frame) to a relay STA and non-AP STA(s) to perform channel estimation for the relay link. The relay trigger frame and/or the User Info field of the relay trigger frame may include at least one of the subfields described in FIG. 21. Furthermore, as described in FIG. 21, the order of the User Info fields included in the relay trigger frame may implicitly indicate the role of a relay STA or a non-AP STA, or the role of an STA transmitting an NDP or an STA receiving an NDP. The relay trigger frame may be transmitted after SIFS since channel information for the AP link is transmitted/received.

In step S3003, the relay STA that receives the trigger frame transmitted by the AP (i.e., the relay trigger frame) may transmit an NDP to non-AP STA(s) using information included in the trigger frame. At this time, the non-AP STA(s) that received the trigger frame transmitted by the AP may identify the NDP transmission of the relay STA based on information in the received trigger frame (e.g., the TX/RX role indication or relay STA indication subfield in the frame, or the order of the User Info field in the relay trigger frame). In order to ensure the channel measurement processing time of the non-AP STA, the PE of the NDP transmitted through the relay link may be set long. For example, the PE may be set to one of 8/16/20us values. The non-AP STA(s) may perform channel measurement based on the NDP and obtain channel information including the result of the channel measurement. The NDP may be transmitted after SIFS since the relay trigger frame is transmitted/received.

In step S3005, to ensure that the non-AP STA receives the NDP, the relay STA may transmit a confirm frame/ACK frame to the AP after transmitting the NDP. The confirm frame/ACK frame may indicate to the AP that the relay STA has transmitted the NDP and/or that the non-AP STA(s) have received the NDP. The confirm frame/ACK frame may be transmitted after SIFS since the NDP is transmitted/received.

In step S3007, the AP, having received the confirm frame/ACK frame from the relay STA, may transmit a feedback/report request frame to the non-AP STA(s) to request channel information for the relay link measured by the non-AP STA(s). The feedback/report request frame may have a structure as described in FIG. 22 and may include at least one of the subfields as described in FIG. 22. The feedback request frame may be transmitted after SIFS since the confirm frame/ACK frame is transmitted/received.

In step S3009, non-AP STAs that receive a report request (i.e., a feedback request frame) from the AP may transmit a report frame containing channel information of the measured relay link to the AP. The report frame may be transmitted directly from the non-AP STA(s) to the AP or may be transmitted via a relay STA. The report frame may be transmitted after SIFS since the report request (i.e., the feedback request frame) is transmitted/received.

In step S3011, the AP that receives the report frame may transmit a NDPA to the relay STA for channel estimation of the link/channel between the AP and the relay STA (i.e., the AP link/channel). The NDPA may include information indicating that the channel estimation is for relay operation (for the AP link). The NPDA may be transmitted after SIFS since the report frame is transmitted/received.

In step S3013, the AP may transmit a NDP to the relay STA. The NDP may be transmitted after SIFS since the NDPA is transmitted/received. The relay STA may perform channel measurement on the AP link based on the NDP and obtain channel information including the results of the channel measurement.

In step S3015, the AP may transmit a feedback request frame to the relay STA. The feedback request frame may be transmitted after SIFS or X interval since the NDP is transmitted/received. The X interval may be set to a value greater than the SIFS and less than the AIFS or DIFS to ensure processing time for the relay STA to estimate the channel and/or obtain channel information. To ensure processing time for the relay STA to perform channel estimation, the packet extension (PE) of the NDP transmitted by the AP may also be set to a longer length. For example, the PE of the NDP may be set to one of the values 8/16/20 µs.

In step S3017, the relay STA, having received the feedback request frame from the AP, may transmit channel information on the AP link to the AP.

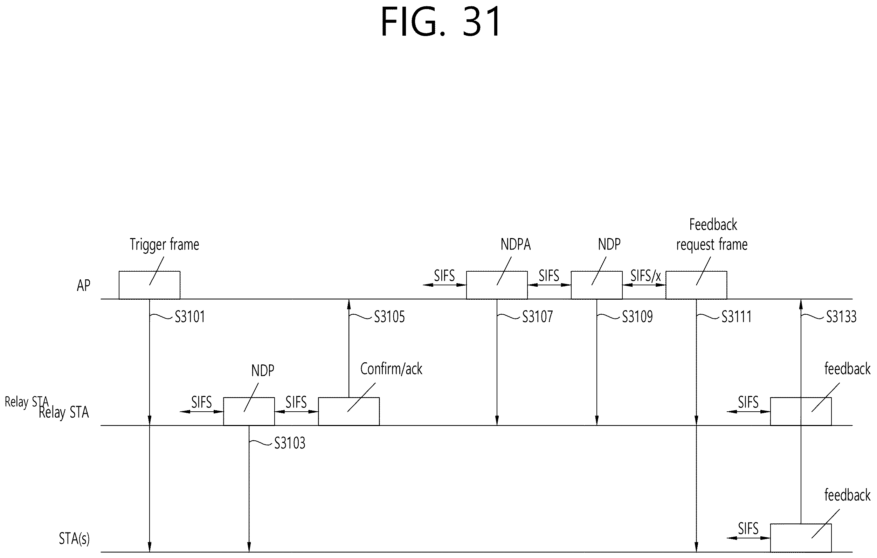

Channel information for the AP link can be transmitted after SIFS since the feedback request frame is transmitted/received. Channel estimation can be performed to optimize the feedback process of FIG. 30, and this scenario is described in FIG. 31.

FIG. 31 shows a fourth example of a procedure for simultaneously performing DL channel estimation for an AP link and DL channel estimation for a relay link, according to an embodiment of the present disclosure.

Referring to FIG. 31, in step S3101, an AP may transmit a trigger frame (i.e., a relay trigger frame) for channel estimation for a relay link to a relay STA and non-AP STA(s). The relay trigger frame and/or the User Info field of the relay trigger frame may include at least one of the subfields described in FIG. 21. Furthermore, as described in FIG. 21, the order of the User Info fields included in the relay trigger frame may implicitly indicate the role of a relay STA or a non-AP STA, or the role of an STA transmitting an NDP or an STA receiving an NDP. The relay STA and non-AP STA(s) that receive the relay trigger frame may be aware that channel estimation for the relay link is being performed. The relay trigger frame may be transmitted after SIFS since the NDP is transmitted/received.

In step S3103, after receiving the trigger frame (i.e., the relay trigger frame), the relay STA may transmit the NDP to non-AP STA(s). To ensure the non-AP STA's channel measurement processing time, the PE of the NDP transmitted over the relay link may be set to a long value. For example, the PE may be set to one of 8/16/20 us. The non-AP STA(s) may perform channel measurement based on the NDP and obtain channel information including the results of the channel measurement. The NDP may be transmitted after SIFS since the relay trigger frame is transmitted/received.

In step S3105, to ensure the non-AP STA's reception of the NDP, the relay STA may transmit a confirm frame/ACK frame to the AP after transmitting the NDP. The confirm frame/ACK frame may indicate to the AP that the relay STA has transmitted an NDP and/or that non-AP STA(s) have received the NDP. The confirm frame/ACK frame may be transmitted after SIFS since the NDP is transmitted/received.

In step S3107, the AP may transmit an NDPA to the relay STA for channel estimation of the link/channel between the AP and the relay STA (i.e., the AP link/channel). The NDPA may include information indicating that the channel estimation is a channel estimation (for the AP link) for relay operation. The NDPA may be transmitted after SIFS since the confirm frame/ACK frame is transmitted/received.

In step S3109, the AP may transmit an NDP to the relay STA. The relay STA may perform channel measurement on the AP link based on the NDP and obtain channel information including the results of the channel measurement. The NDP may be transmitted after SIFS since the NDPA is transmitted/received.

In step S3111, the AP may transmit a feedback/report request frame to the relay STA and non-AP STA(s) for feedback on channel measurements (i.e., channel measurements for the AP link and/or channel measurements for the relay link). The feedback/report request frame may have a structure as described in FIG. 22 and may include at least one of the subfields as described in FIG. 22. The feedback/report request frame may be transmitted after an SIFS or X interval since the NDP is transmitted/received. The X interval may be set to a value greater than the SIFS and less than the AIFS or DIFS to ensure processing time for the relay STA to estimate the channel and/or obtain channel information.

In step S3113, the relay STA and non-AP STA(s) that received the feedback/report request frame from the AP may transmit channel information to the AP based on information included in the feedback/report request frame. That is, a relay STA can transmit channel information for the AP link to the AP, and non-AP STA(s) can transmit channel information for the relay link to the AP (via the relay STA). In some implementations, the process of feedback/transmitting channel information to the AP can be performed (sequentially) for each of the relay STA and non-AP STA(s). In some implementations, channel information for the relay link measured by the non-AP STA(s) is transmitted to the relay STA, and the relay STA can transmit channel information for the relay link to the AP. In this case, the feedback information transmitted by the relay STA to the AP may include at least one of the channel information for the AP link measured by the relay STA or the channel information for the relay link received from the non-AP STA(s).

### IV. Sequential channel estimation method for AP link and relay link in the case of UL sounding

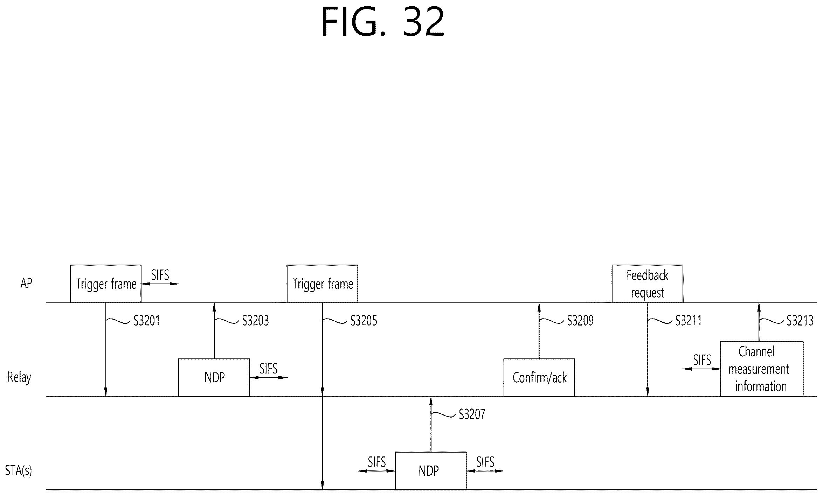

Similar to DL sounding, sequential channel estimation can be performed for the AP link and relay link in the case of UL sounding. For example, as illustrated in FIG. 32, after UL channel estimation for the AP link is performed, UL channel estimation for the relay link may be performed sequentially/continuously.

FIG. 32 shows a first example of a procedure for simultaneously performing UL channel estimation for the AP link and UL channel estimation for the relay link, according to an embodiment of the present disclosure.

Referring to FIG. 32, in step S3201, the AP may transmit a trigger frame to the relay STA for channel estimation of the UL channel (i.e., the AP link/channel) between the AP and the relay STA. The trigger frame may include information indicating UL sounding.

In step S3203, the relay STA that receives the trigger frame may transmit an NDP to the AP. The NDP may be a TB PPDU without a data field. The AP may perform channel measurement for the AP link based on the NDP and obtain channel information including the results of the channel measurement. The NDP may be transmitted after SIFS since the trigger frame is transmitted/received.

In step S3205, the AP, which has received the NDP from the relay STA, may transmit a trigger frame (i.e., a relay trigger frame) to the relay STA and non-AP STA(s) for UL channel estimation for the relay link. The relay STA and non-AP STA(s) that have received the relay trigger frame may be aware that channel estimation for the relay link is being performed. For example, a channel estimation indication for the relay link may be included in the relay trigger frame transmitted by the AP. The relay trigger frame and/or the User Info field of the relay trigger frame may include at least one of the subfields described in FIG. 26. Additionally, as described in FIG. 26, the role of a relay STA or a non-AP STA, or the role of an STA transmitting an NDP or an STA receiving an NDP, may be implicitly indicated through the order of the User Info fields included in a trigger frame (i.e., a relay trigger frame) transmitted to perform channel measurement on a relay link for relay transmission/operation. The relay trigger frame may be transmitted after SIFS since the NDP is transmitted/received.

In step S3207, the non-AP STA(s) may transmit an NDP to the relay STA based on the information included in the relay trigger frame, and the relay STA receiving the relay trigger frame may prepare to receive the NDP transmitted from the non-AP STA(s). The NDP transmitted by the non-AP STA(s) may be a TB PPDU that does not include a data field. The relay STA receiving the NDP may perform UL channel measurement based on the received NDP and obtain channel information including the results of the channel measurement. The NDP may be transmitted after SIFS since the transmission/reception of the relay trigger frame.

In step S3209, the relay STA that received the NDP from the non-AP STA(s) may transmit a confirm frame/ACK frame to the AP. The confirm frame/ACK frame may indicate to the AP that the relay STA has received a signal (e.g., NDP) from the non-AP STA(s). The confirm frame/ACK frame may be transmitted after SIFS since the NDP is transmitted/received.

In step S3211, the AP, which has received a confirm frame/ACK frame from the relay STA, may transmit a feedback/report request frame to the relay STA to receive feedback on channel information between the measured relay STA and non-AP STA(s). The feedback/report request frame may be used to request a channel measurement report. The User Info field of the feedback/report request frame may have a structure similar to that described in FIG. 22 and may include at least one of the subfields similar to that described in FIG. 22. The feedback request frame may be transmitted after SIFS since the confirm frame is transmitted/received.

In step S3213, the relay STA, which has received the feedback/report request frame, may transmit channel information between the relay STA and non-AP STA(s) to the AP. The channel information may be transmitted after SIFS since the feedback/report request frame is transmitted/received.

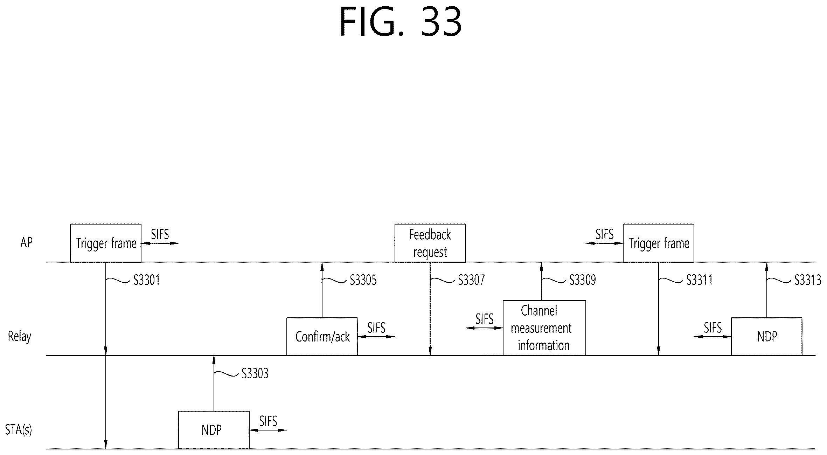

As another example, as illustrated in FIG. 33, UL channel estimation for an AP link may be performed sequentially/continuously after UL channel estimation for a relay link is performed.

FIG. 33 shows a second example of a procedure for simultaneously performing UL channel estimation for an AP link and UL channel estimation for a relay link, according to an embodiment of the present disclosure.

Referring to FIG. 33, in step S3301, an AP may transmit a trigger frame (i.e., a relay trigger frame) to relay STAs and non-AP STA(s) for UL channel estimation for the relay link. Relay STAs and non-AP STA(s) that receive the relay trigger frame may be notified that channel estimation for the relay link is being performed. For example, a channel estimation indication for the relay link may be included in the relay trigger frame transmitted by the AP. The relay trigger frame and/or the User Info field of the relay trigger frame may include at least one of the subfields described in FIG. 26. Additionally, as described in FIG. 26, the role of a relay STA or a non-AP STA, or the role of an STA transmitting an NDP or an STA receiving an NDP, may be implicitly indicated through the order of the User Info fields included in a trigger frame (i.e., a relay trigger frame) transmitted to perform channel measurement on a relay link for relay transmission/operation.

In step S3303, the non-AP STA(s) may transmit an NDP to the relay STA based on the information included in the relay trigger frame, and the relay STA receiving the relay trigger frame may prepare to receive the NDP transmitted from the non-AP STA(s). The NDP transmitted by the non-AP STA(s) may be a TB PPDU that does not include a data field. The relay STA receiving the NDP may perform UL channel measurement based on the received NDP and obtain channel information including the results of the channel measurement. The NDP may be transmitted after SIFS since the transmission/reception of the relay trigger frame.

In step S3305, the relay STA that received the NDP from the non-AP STA(s) may transmit a confirm frame/ACK frame to the AP. The confirm frame/ACK frame may indicate to the AP that the relay STA has received a signal (e.g., an NDP) from the non-AP STA(s). The confirm frame/ACK frame may be transmitted after SIFS since the NDP is transmitted/received.

In step S3307, the AP that received the confirm frame/ACK frame from the relay STA may transmit a feedback/report request frame to the relay STA to receive feedback on measured channel information. The feedback/report request frame may be used to request a channel measurement report. The User Info field of the feedback/report request frame may have a structure as described in FIG. 22 and may include at least one of the subfields as described in FIG. 22. The feedback request frame may be transmitted after SIFS since the confirm frame is transmitted/received.

In step S3309, the relay STA that receives the feedback/report request frame may transmit channel information between the relay STA and non-AP STA(s) to the AP. The channel information may be transmitted after SIFS since the feedback/report request frame is transmitted/received.

In step S3311, the AP may transmit a trigger frame to the relay STA for channel estimation on the UL channel (i.e., the AP link/channel) between the AP and the relay STA. The trigger frame may include information indicating UL sounding. The trigger frame may be transmitted after SIFS since the channel information is transmitted/received.

In step S3313, the relay STA that receives the trigger frame may transmit a NDP to the AP. The NDP may be a TB PPDU without a data field. The AP may perform channel measurement on the AP link based on the NDP and obtain channel information including the results of the channel measurement. The NDP may be transmitted after SIFS since the trigger frame is transmitted/received.

In embodiments of the present disclosure, SIFS is exemplary and may be replaced with another value.

In embodiments of the present disclosure, a confirm frame/ACK frame transmitted to ensure transmission or reception by an STA may be omitted.

The technical features of the present disclosure described above can be applied to various devices and methods. For example, the technical features of the present disclosure described above can be performed/supported by the devices of FIG. 1 and/or FIG. 13. For example, the technical features of the present disclosure described above can be applied only to a part of FIG. 1 and/or FIG. 13. For example, the technical features of the present disclosure described above can be implemented based on the processing chips 114, 124 of FIG. 1, or implemented based on the processors 111, 121 and the memories 112, 122 of FIG. 1, or implemented based on the processor 610 and the memory 620 of FIG. 13.

For example, the processor 111, the processing chip 114 of FIG. 1 and/or the processor 610 of FIG. 13 may be configured to execute instructions stored in the memory 112, 620 to implement the method performed by the STA in the present disclosure. The method comprises: receiving, from an access point (AP), a relay trigger frame for relay operation via a relay STA between the AP and the STA; monitoring a signal for measuring a relay channel between the relay STA and the STA from the relay STA based on the reception of the relay trigger frame; obtaining relay channel information for the relay channel based on the signal for measuring the relay channel; and transmitting the relay channel information.

For example, the processor 121 and/or processing chip 124 of FIG. 1 may be configured to execute instructions stored in the memory 122 to implement the method performed by the relay STA in the present disclosure. The method comprises: receiving, from an access point (AP), a relay trigger frame for relay operation via the relay STA between the AP and one or more STAs; based on reception of the relay trigger frame, transmitting, to the one or more STAs, a signal for measuring a relay channel between the relay STA and the one or more STAs; and based on at least one parameter related to a measurement result for the relay channel, relaying a signal for relay operation between the AP and the one or more STAs on the relay channel.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 112 of FIG. 1, the memory 620 of FIG. 13, and/or a separate external memory/storage medium/disk. The CRM may store instructions that implement the method performed by the STA in the present disclosure based on being executed by a processor (e.g., the processor 111, the processing chip 114 of FIG. 1, and/or the processor 610 of FIG. 13). The method comprises: receiving, from an access point (AP), a relay trigger frame for relay operation via a relay STA between the AP and the STA; monitoring a signal for measuring a relay channel between the relay STA and the STA from the relay STA based on the reception of the relay trigger frame; obtaining relay channel information for the relay channel based on the signal for measuring the relay channel; and transmitting the relay channel information.

For example, the CRM may be the memory 122 of FIG. 1 and/or a separate external memory/storage medium/disk. The CRM may store instructions that implement the method performed by the relay STA in the present disclosure based on being executed by a processor (e.g., the processor 121 and/or the processing chip 124 of FIG. 1). The method comprises: receiving, from an access point (AP), a relay trigger frame for relay operation via the relay STA between the AP and one or more STAs; based on reception of the relay trigger frame, transmitting, to the one or more STAs, a signal for measuring a relay channel between the relay STA and the one or more STAs; and based on at least one parameter related to a measurement result for the relay channel, relaying a signal for relay operation between the AP and the one or more STAs on the relay channel.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, by using channel information between a relay STA and a non-AP STA, transmission parameters appropriate to the channel conditions can be applied when transmitting and receiving signals between the relay STA and the non-AP STA, and thus, a reduction in delay and an improvement in throughput of relay transmission can be expected.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method performed by a station (STA) in a wireless local area network (LAN) system, comprising:
receiving, from an access point (AP), a relay trigger frame for relay operation via a relay STA between the AP and the STA;
monitoring a signal for measuring a relay channel between the relay STA and the STA from the relay STA based on the reception of the relay trigger frame;
obtaining relay channel information for the relay channel based on the signal for measuring the relay channel; and
transmitting the relay channel information.

2. The method of claim 1, wherein the relay trigger frame comprises information indicating that a corresponding trigger frame is a trigger frame for relay operation.

3. The method of claim 2, wherein the information comprises a trigger type subfield in the relay trigger frame.

4. The method of claim 3, wherein, based on the information comprising the trigger type subfield, a trigger dependent Common Info field of the relay trigger frame indicates at least one of a polling trigger, a relay transmission trigger, a sounding trigger, or a reporting trigger.

5. The method of claim 2, wherein the information comprises one or more reserved bits in a Common Info field of the relay trigger frame, and
wherein the one or more reserved bits are used as a relay transmission subfield.

6. The method of claim 5, wherein the one or more reserved bits comprise bits common to a high-efficiency (HE) variant Common Info field and an extreme high throughput (EHT) variant Common Info field.

7. The method of claim 5, wherein the one or more reserved bits comprise at least one reserved bit for an extreme high throughput (EHT) variant Common Info field.

8. The method of claim 1, wherein the relay trigger frame comprises role information indicating reception or transmission of the signal for measuring the relay channel, and
wherein the monitoring of the signal for measuring the relay channel comprises monitoring the signal for measuring the relay channel from the relay STA based on the role information indicating reception of the signal for measuring the relay channel.

9. The method of claim 1, further comprising receiving a feedback request frame from the AP,
wherein the transmitting of the relay channel information comprises transmitting the relay channel information in response to receiving the feedback request frame.

10. The method of claim 1, wherein the relay channel information is transmitted to the AP via the relay STA.

11. The method of claim 1, wherein the signal for measuring the relay channel is transmitted after a short interframe space (SIFS) since the relay trigger frame is transmitted.

12. The method of claim 1, wherein the signal for measuring the relay channel comprises a null data packet (NDP), and
wherein the relay channel information comprises a measurement result for the relay channel.

13. A station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving, from an access point (AP), a relay trigger frame for relay operation via a relay STA between the AP and the STA;
monitoring a signal for measuring a relay channel between the relay STA and the STA from the relay STA based on the reception of the relay trigger frame;
obtaining relay channel information for the relay channel based on the signal for measuring the relay channel; and
transmitting the relay channel information.

14. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
receiving, from an access point (AP), a relay trigger frame for relay operation via a relay STA between the AP and the STA;
monitoring a signal for measuring a relay channel between the relay STA and the STA from the relay STA based on the reception of the relay trigger frame;
obtaining relay channel information for the relay channel based on the signal for measuring the relay channel; and
transmitting the relay channel information.

15. A non-transitory computer readable medium (CRM) having stored thereon a program code implementing instructions that, based on being executed by at least one processor, perform operations comprising:
receiving, from an access point (AP), a relay trigger frame for relay operation via a relay STA between the AP and the STA;
monitoring a signal for measuring a relay channel between the relay STA and the STA from the relay STA based on the reception of the relay trigger frame;
obtaining relay channel information for the relay channel based on the signal for measuring the relay channel; and
transmitting the relay channel information.

16. A method performed by a relay station (STA) in a wireless local area network (LAN) system, comprising:
receiving, from an access point (AP), a relay trigger frame for relay operation via the relay STA between the AP and one or more STAs;
based on reception of the relay trigger frame, transmitting, to the one or more STAs, a signal for measuring a relay channel between the relay STA and the one or more STAs; and
based on at least one parameter related to a measurement result for the relay channel, relaying a signal for relay operation between the AP and the one or more STAs on the relay channel.

17. A relay station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
receiving, from an access point (AP), a relay trigger frame for relay operation via the relay STA between the AP and one or more STAs;
based on reception of the relay trigger frame, transmitting, to the one or more STAs, a signal for measuring a relay channel between the relay STA and the one or more STAs; and
based on at least one parameter related to a measurement result for the relay channel, relaying a signal for relay operation between the AP and the one or more STAs on the relay channel.

18. The relay STA of claim 17, wherein the relay trigger frame comprises information indicating that a corresponding trigger frame is a trigger frame for relay operation.

19. The relay STA of claim 17, wherein the relay trigger frame comprises role information indicating reception or transmission of the signal for measuring the relay channel, and
wherein the transmitting of the signal for measuring the relay channel comprises transmitting the signal for measuring the relay channel to the one or more STAs based on the role information indicating transmission of the signal for measuring the relay channel.

20. The relay STA of claim 17, wherein the signal for measuring the relay channel is transmitted after a short interframe space (SIFS) since the relay trigger frame is transmitted.
